# EUROPÄISCHE PATENTSCHRIFT

(11) **EP 3 163 444 B1**
(45) Veröffentlichungstag und Bekanntmachung des Hinweises auf die Patenterteilung: **27.11.2019**
(21) Anmeldenummer: 15191853.9
(22) Anmeldetag: 28.10.2015
(51) Int. Cl.: G06F 9/50, G06Q 10/06

(54) **RECHNERVERBUND MIT AUTOMATISIERTER ANFORDERUNG UND ZUORDNUNG VON CLOUD-RESSOURCEN**
COMPUTER NETWORK WITH AUTOMATED REQUEST AND ALLOCATION OF CLOUD RESOURCES
RESEAU INFORMATIQUE FAISANT APPEL A LA SOLLICITATION ET L'AFFECTATION AUTOMATIQUES DE RESSOURCES INFONUAGIQUES

(43) Veröffentlichungstag der Anmeldung: 03.05.2017
(73) Patentinhaber: Siemens Healthcare GmbH, 91052 Erlangen (DE)
(72) Erfinder: Dominick, Lutz, 91330 Eggolsheim (DE); Ukis, Vladyslav, 90489 Nürnberg (DE)

(56) Entgegenhaltungen:
- US-B1- 9 098 329

## Beschreibung

Die vorliegende Erfindung geht aus von einem Betriebsverfahren für einen Rechner eines Rechnerverbundes, wobei der Rechnerverbund eine Anzahl von Arbeitsplätzen aufweist, über die ein jeweiliger Benutzer unter Bearbeitung von jeweiligen Nutzdaten mindestens eine jeweilige Applikation ausführt, wobei der Rechner ein Ressourcenverwaltungsprogramm ausführt, wobei der Rechner aufgrund der Ausführung des Ressourcenverwaltungsprogramms der jeweiligen Applikation zur Verfügung stehende Ressourcen einer Cloud zuordnet.

Die vorliegende Erfindung geht weiterhin aus von einem Ressourcenverwaltungsprogramm, das Maschinencode umfasst, der von einem Rechner eines Rechnerverbunds unmittelbar ausführbar ist, wobei die Abarbeitung des Maschinencodes durch den Rechner des Rechnerverbunds bewirkt, dass der Rechner den Rechnerverbund gemäß einem derartigen Betriebsverfahren verwaltet.

Die vorliegende Erfindung geht weiterhin aus von einem Rechnerverbund,
- wobei der Rechnerverbund eine Anzahl von Arbeitsplätzen aufweist, über die von einem jeweiligen Benutzer unter Bearbeitung von jeweiligen Nutzdaten mindestens eine jeweilige Applikation ausführbar ist,
- wobei der Rechnerverbund weiterhin einen Rechner aufweist, der ein derartiges Ressourcenverwaltungsprogramm ausführt.

Cloud Computing nimmt mehr und mehr zu. Beim Cloud Computing stellt ein Anbieter - selbstverständlich gegen Entgelt - Rechenleistung in Paketen zur Verfügung. Beispielsweise stehen einem Anbieter an einem bestimmten Ort auf der Erde insgesamt ca. 10.000 physikalische Rechner zur Verfügung. Jeder physikalische Rechner weist eine Anzahl von Rechnerkernen (CPUs) auf, beispielsweise 16 Rechnerkerne. Die physikalischen Rechner weisen weiterhin jeweils einen Arbeitsspeicher und einen Festplatten- oder vergleichbaren Speicher auf, beispielsweise 128 GB Arbeitsspeicher und 3 TB Festplattenspeicher. Die Rechnerkerne des jeweiligen Rechners teilen sich dynamisch den jeweiligen Arbeitsspeicher und den jeweiligen Festplattenspeicher. Die genannten Zahlenwerte für die Anzahl an Kernen, den Arbeitsspeicher und eventuell auch die Festplattenkapazität sind selbstverständlich nur beispielhaft. Die physikalischen Rechner können beispielsweise in einer Anzahl von 40-Fuß-Standardcontainern angeordnet sein. In mindestens einem weiteren derartigen Standard-Container - nachfolgend zur Unterscheidung von den zuvor genannten Standard-Containern als Speichercontainer bezeichnet - ist ein zentraler Datenspeicher angeordnet, der beispielsweise mehrere 10 TB-Datenbank-Cluster umfasst, die jeweils aus einem System von mehreren Festplatten und spezialisierten Datenbank-Rechnern gebildet werden. Auch der mindestens eine Speichercontainer ist an dem genannten Ort angeordnet. Die Standardcontainer und die Speichercontainer können permanent verschlossen bleiben. Sie benötigen lediglich Anschlüsse für die Energieversorgung, die Kühlung und die Kommunikation untereinander sowie mit dem Internet bzw. World Wide Web.

Der Anbieter bietet Gruppen von Rechnern an, die üblicherweise als virtuelle Maschinen bezeichnet werden. Beispielsweise kann der Anbieter eine kleine, eine mittlere und eine große virtuelle Maschine anbieten. Eine kleine virtuelle Maschine besteht beispielsweise aus 4 Rechnern. Eine mittlere virtuelle Maschine besteht beispielsweise aus 16 Rechnern. Eine große virtuelle Maschine besteht beispielsweise aus 64 Rechnern. Auch hier sind die genannten Zahlenwerte rein beispielhaft.

Von einem die virtuellen Maschinen verwaltenden Cloudrechner werden Anforderungen für virtuelle Maschinen entgegengenommen. Die Anforderungen werden von Rechnern von Rechnerverbunden gestellt und über das Internet an den Cloudrechner übermittelt. Der Cloudrechner reserviert daraufhin die jeweils angeforderte Menge an virtuellen Maschinen für die jeweilige Anforderung und übermittelt an den jeweils anfordernden Rechner die entsprechenden Zugriffsdaten, so dass vom jeweiligen Rechnerverbund aus auf die entsprechenden virtuellen Maschinen zugegriffen werden kann. Die Reservierung für die jeweilige Anforderung wird beibehalten, bis dem Cloudrechner vom anfordernden Rechner des Rechnerverbundes eine Freigabe übermittelt wird.

Auch die sehr große Rechenkapazität eines derartigen Anbieters von Cloud Computing ist selbstverständlich irgendwann erschöpft. In der Praxis kann jedoch davon ausgegangen werden, dass stets in hinreichendem Umfang virtuelle Maschinen zur Verfügung stehen, um alle Anforderungen erfüllen zu können.

Es ist möglich, dass die Zuordnung der Rechner zu kleinen, mittleren und großen virtuellen Maschinen vom Anbieter der Cloud vorab einmalig vorgenommen wird und während der Verwaltung der Rechner durch den Cloudrechner statisch beibehalten wird. Alternativ ist es möglich, dass der Cloudrechner die jeweils angeforderten virtuellen Maschinen erst aufgrund der jeweiligen Anforderung konfiguriert.

Unabhängig davon, ob die Zuordnung der Rechner zu kleinen, mittleren und großen virtuellen Maschinen statisch ist oder dynamisch erfolgt, können jedoch pro Anforderung ausschließlich virtuelle Maschinen gleicher Größe angefordert werden, beispielsweise mittlere virtuelle Maschinen. Mischungen verschiedener virtueller Maschinen sind nicht möglich. Es ist daher zwar möglich, dass von einem Rechner eines Rechnerverbundes beispielsweise mittels einer ersten Anforderung zehn mittlere virtuelle Maschinen und zusätzlich mittels einer zweiten Anforderung drei große virtuelle Maschinen angefordert werden. Es ist hingegen nicht möglich, in einer einzigen Anforderung zehn mittlere virtuelle Maschinen und gleichzeitig drei große virtuelle Maschinen anzufordern.

Unabhängig davon, ob die Zuordnung der Rechner zu kleinen, mittleren und großen virtuellen Maschinen statisch ist oder dynamisch erfolgt, sind weiterhin Änderungen einer einmal erfolgten Anforderung nur mit erheblichen Einschränkungen möglich. Wenn von einem Rechner eines Rechnerverbundes beispielsweise zehn mittlere virtuelle Maschinen angefordert wurden, ist es nicht möglich, diese Anforderung nachträglich auf zwölf mittlere virtuelle Maschinen zu erweitern, also zu den bereits angeforderten zehn mittleren virtuellen Maschinen zwei weitere mittlere virtuelle Maschinen zusätzlich anzufordern. Es ist lediglich möglich, die bisherige Anforderung von zehn mittleren virtuellen Maschinen aufzugeben bzw. zu beenden und stattdessen eine neue Anforderung für zwölf mittlere virtuelle Maschinen zu starten.

Die Übermittlung der jeweiligen Anforderung an den Cloudrechner erfolgt, wie bereits erwähnt, durch einen Rechner eines Rechnerverbundes. Bei dem Rechnerverbund kann es sich beispielsweise um ein Rechnersystem eines Krankenhauses handeln. Die der jeweiligen Anforderung zu Grunde liegenden Vorgaben werden dem Rechner des Rechnerverbundes von einem Administrator (einem Menschen) vorgegeben, der aufgrund von Vorgaben den Bedarf an virtuellen Maschinen ermittelt und dem Rechner des Rechnerverbundes entsprechende Größen vorgibt. Der Rechner des Rechnerverbundes nimmt sodann - d.h. nach dem Übermitteln der Anforderung an den Cloudrechner - vom Cloudrechner automatisch eine Zuteilung von Ressourcen entgegen. Er verwaltet intern (d.h. innerhalb des Rechnerverbundes) die Ressourcen. Insbesondere teilt der Rechner den einzelnen Arbeitsplätzen und den an ihnen durchgeführten Applikationen dynamisch jeweils ihren Anteil an den Ressourcen zu.

Als direkte Folge dieser Vorgehensweise ergibt sich, dass die Anforderung der Ressourcen jeweils nur für relativ lange Zeiträume erfolgen kann, mindestens für etliche Minuten, in der Regel mehrere Stunden oder noch größere Zeiträume wie Tage, Wochen oder Monate. Innerhalb des jeweiligen Zeitraums stehen jeweils die angeforderten Ressourcen in vollem Umfang zur Verfügung. Ob sie tatsächlich genutzt werden oder nicht, ist unerheblich.

Die Vorgehensweise des Standes der Technik verursacht daher Kosten, die oftmals in diesem Ausmaß aufgrund der nicht vollständigen Ausnutzung der angeforderten Ressourcen nicht erforderlich sind. Als weitere Folge dieser Vorgehensweise ergibt sich, dass innerhalb des betreffenden Zeitraums mehr als die angeforderten Ressourcen nicht zur Verfügung stehen. Damit stellt sich trotz der Nutzung von Cloud Computing und der damit verbunden anforderbaren nahezu unbegrenzten Rechenkapazität prinzipiell das gleiche Problem wie ohne Nutzung von Cloud Computing, nämlich dass innerhalb des betreffenden Zeitraums nur eine statisch vorbestimmte Rechenleistung zur Verfügung steht. Einer der wesentlichen Vorteile von Cloud Computing, nämlich dass nach Bedarf Rechenleistung gekauft werden kann, kann daher nicht genutzt werden. Entweder die Anforderung ist überdimensioniert, um jederzeit jeder Applikation ihre Rechenleistung zur Verfügung zu stellen. Dies verursacht unnötige Kosten. Oder es kann zu Engpässen kommen, so dass Applikationen "ausgebremst" werden, weil aufgrund gleichzeitiger Anforderung von Ressourcen durch eine Mehrzahl von Applikationen den einzelnen Applikationen nicht genügend Ressourcen zugeteilt werden können. Dies gilt unabhängig davon, ob die Applikationen am selben Arbeitsplatz oder auf verschiedenen Arbeitsplätzen ablaufen.

Aus der US 9 098 329 B1 ist ein Betriebsverfahren für einen Rechner eines Rechnerverbundes bekannt. Im Rahmen dieses Rechnerverbundes existiert eine Verwaltungskomponente, die den Arbeitsablauf der Rechner des Rechnerverbundes verwaltet. Die Verwaltungskomponente fragt bei den Rechnern des Rechnerverbundes ab, ob und in welchem Ausmaß sie freie Kapazitäten verfügen und um welche Kapazitäten es sich gegebenenfalls handelt. Die Verwaltungskomponente erhält weiterhin von externen Rechnern Anfragen nach Rechenleistung. Die Verwaltungskomponente bestimmt, welchen Anfragen sie welche der freien Kapazitäten zuordnet.

Die Aufgabe der vorliegenden Erfindung besteht darin, Möglichkeiten zu schaffen, mittels derer die Nachteile des Standes der Technik behoben werden können. Insbesondere soll erreicht werden, den Applikationen jederzeit die erforderlichen Ressourcen zur Verfügung stellen zu können, ohne vorab Cloud-Ressourcen im Übermaß anfordern zu müssen.

Die Aufgabe wird durch ein Betriebsverfahren für einen Rechner eines Rechnerverbundes mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren für einen Rechner eines Rechnerverbundes, wobei der Rechnerverbund eine Anzahl von Arbeitsplätzen aufweist, über die ein jeweiliger Benutzer unter Bearbeitung von jeweiligen Nutzdaten mindestens eine jeweilige Applikation ausführt, wobei der Rechner ein Ressourcenverwaltungsprogramm ausführt, derart ausgestaltet, dass der Rechner aufgrund der Ausführung des Ressourcenverwaltungsprogramms
- zumindest beim Starten der jeweiligen Applikation automatisch anhand von für die jeweilige Applikation vordefinierten Applikationsdaten für die jeweilige Applikation einen Ressourcenbedarf ermittelt,
- bei einem Ressourcen einer Cloud verwaltenden Cloudrechner automatisch gemäß dem ermittelten Ressourcenbedarf Ressourcen anfordert,
- vom Cloudrechner aufgrund der Anforderung automatisch eine Zuteilung von Ressourcen entgegennimmt, wobei die Zuteilung die Zugriffsdaten enthält, die erforderlich sind, um auf die zugeteilten Ressourcen zugreifen zu können,
- die aufgrund der Anforderung für die jeweilige Applikation zugeteilten Ressourcen automatisch der jeweiligen Applikation zuordnet,
- ab dem Zuordnen der Ressourcen zur jeweiligen Applikation automatisch überwacht, ob eine von der jeweiligen Applikation, aber nicht von anderen Applikationen abhängige jeweilige Freigabebedingung für die der jeweiligen Applikation zugeordneten Ressourcen eintritt,
- die Zuordnung der der jeweiligen Applikation zugeordneten Ressourcen zur jeweiligen Applikation beibehält, bis die jeweilige Freigabebedingung erfüllt ist, und
- bei Eintreten der jeweiligen Freigabebedingung die der jeweiligen Applikation zugeordneten Ressourcen automatisch an die Cloud zurückgibt.

Der Rechner des Rechnerverbundes ermittelt also für jede Applikation automatisch und unabhängig von den anderen Applikationen ihren jeweiligen Ressourcenbedarf, fordert den Ressourcenbedarf bei der Cloud an und ordnet die für die jeweilige Applikation angeforderten Ressourcen fest der jeweiligen Applikation zu. Die Applikationsdaten sind hierbei nicht die von der jeweiligen Applikation verarbeiteten Nutzdaten, sondern Daten, die für den Ressourcenbedarf der jeweiligen Applikation spezifisch sind. Der Ressourcenbedarf gibt insbesondere an, wieviele virtuelle Maschinen (und gegebenenfalls auch welcher Größe) für die jeweilige Applikation benötigt werden. Die erfindungsgemäße Vorgehensweise bewirkt insbesondere eine sichere Voraussage der interaktiven Performance der jeweiligen Applikation. Denn Störungen durch andere Applikationen sind ausgeschlossen.

Es ist möglich, dass die Nutzdaten lokal gespeichert sind, d.h. den Arbeitsplätzen zugeordnet sind. Alternativ können die Nutzdaten innerhalb des Rechnerverbundes an einer zentralen Stelle gespeichert sein, beispielsweise in einem PACS. In der Regel sind die Nutzdaten und auch aus den Nutzdaten abgeleitete Daten jedoch ebenfalls innerhalb der Cloud gespeichert. Insbesondere können die Nutzdaten und die aus den Nutzdaten abgeleiteten Daten in dem zentralen Datenspeicher, also in einem der erwähnten Speichercontainer, gespeichert sein. Dies ist im Rahmen der vorliegenden Erfindung jedoch von untergeordneter Bedeutung.

Im einfachsten Fall erfolgt durch den Rechner eine einmalige, feste Zuordnung der Ressourcen zur jeweiligen Applikation beim Starten der jeweiligen Applikation. In diesem Fall ist die Freigabebedingung der jeweiligen Applikation das Beenden der jeweiligen Applikation. Der Rechner ergreift in diesem Fall aufgrund der Ausführung des Ressourcenverwaltungsprogramms im Falle des Beendens der jeweiligen Applikation bezüglich der jeweiligen Applikation und deren Ressourcen über die Freigabe der Ressourcen hinaus keine weiteren Maßnahmen. Er gibt also zwar die für die nunmehr beendete Applikation angeforderten Ressourcen an die Cloud zurück. Andere Applikationen und deren Ressourcen werden hierdurch jedoch nicht beeinflusst.

In vielen Fällen weist die jeweilige Applikation eine Mehrzahl von Prozessabschnitten auf. In diesem Fall besteht eine vorteilhafte Ausgestaltung darin, die Ressourcen nicht der Applikation als solcher, sondern dem jeweiligen Prozessabschnitt zuzuordnen. Dies kann dadurch realisiert werden,
- dass die jeweilige Applikation eine Mehrzahl von Prozessabschnitten aufweist,
- dass die für die jeweilige Applikation vordefinierten Applikationsdaten für jeden der Prozessabschnitte jeweilige Prozessdaten umfassen,
- dass die Freigabebedingung das Beenden des Ausführens des jeweils ausgeführten Prozessabschnitts ist,
- dass der Rechner aufgrund der Ausführung des Ressourcenverwaltungsprogramms zu einem spätestens beim Eintreten der jeweiligen Freigabebedingung liegenden Zeitpunkt prüft, ob die jeweilige Applikation bei Beenden des momentan ausgeführten Prozessabschnitts fortgesetzt oder beendet wird, im Falle des Beendens der jeweiligen Applikation zwar die Ressourcen an die Cloud zurückgibt, andere Applikationen und deren Ressourcen jedoch nicht beeinflusst und im Falle des Startens oder der Fortsetzung der jeweiligen Applikation
   -- anhand der Prozessdaten des jeweils auszuführenden Prozessabschnitts für den jeweils auszuführenden Prozessabschnitt automatisch den Ressourcenbedarf ermittelt,
   -- bei dem Cloudrechner automatisch den ermittelten Ressourcenbedarf anfordert,
   -- vom Cloudrechner aufgrund der Anforderung automatisch eine Zuteilung von Ressourcen entgegennimmt und
   -- die aufgrund der jeweiligen Anforderung für die jeweilige Applikation zugeteilten Ressourcen automatisch dem jeweils auszuführenden Prozessabschnitt zuordnet.

Im einfachsten Fall ist der Zeitpunkt mit dem Eintreten der Freigabebedingung identisch. In diesem Fall erfolgt bei Eintreten der Freigabebedingung zwar eine Freigabe der bisher angeforderten Ressourcen, bei Fortsetzen der Applikation werden jedoch gleichzeitig neue Ressourcen angefordert und der jeweiligen Applikation bzw. dem als nächstes auszuführenden Prozessabschnitt der jeweiligen Applikation zugeteilt. In der Regel erfolgt die Anforderung und Zuteilung der neuen Ressourcen kurz vor Beendigung des momentan ausgeführten Prozessabschnitts und damit insbesondere auch vor der Freigabe der Ressourcen des momentan ausgeführten Prozessabschnitts. Dadurch ist es insbesondere möglich, die erfindungsgemäße Vorgehensweise bei sogenannten zustandsbehafteten Applikationen anzuwenden, d.h. bei Applikationen, die ihre Daten nur einmal an die Cloud übermitteln. Insbesondere kann dadurch in einem Übergabezeitraum innerhalb der Cloud ein etwa erforderlicher Datentransfer von den virtuellen Maschinen des momentan ausgeführten Prozessabschnitts zu den virtuellen Maschinen des als nächstes auszuführenden Prozessabschnitts erfolgen. Als Übergabezeitraum ist hierbei derjenige Zeitraum bezeichnet, zu dem die virtuellen Maschinen des als nächstes auszuführenden Prozessabschnitts bereits bei der Cloud angefordert und dem als nächstes auszuführenden Prozessabschnitt zugeteilt sind, die virtuellen Maschinen des momentan ausgeführten Prozessabschnitts jedoch noch nicht an die Cloud zurückgegeben worden sind.

Analog zu den Applikationsdaten sind die Prozessdaten des jeweiligen Prozessabschnitts nicht die von der jeweiligen Applikation im Rahmen des jeweiligen Prozessabschnitts verarbeiteten Nutzdaten, sondern Daten, die für den Ressourcenbedarf des jeweiligen Prozessabschnitts spezifisch sind. Die Aufteilung der Applikation in Prozessabschnitte bewirkt insbesondere eine dynamische Anpassung der der jeweiligen Applikation zugeteilten Ressourcen im Laufe der Ausführung der Applikation. Dadurch kann dynamisch jederzeit auf sich ändernde Sachverhalte im Rahmen der Ausführung der jeweiligen Applikation reagiert werden.

Wenn zwar die Prozessabschnitte bekannt sind, aber nicht notwendigerweise vorab eine feste Sequenz der Prozessabschnitte bekannt ist, kann diese Vorgehensweise aufgrund des Umstands, dass der neue Prozessabschnitt erst mit dem Beginn des neuen Prozessabschnitts bekannt ist und demzufolge die Anforderung der neuen Ressourcen erst mit dem Beginn des neuen Prozessabschnitts angefordert werden können, mit geringfügigen, vom Benutzer der jeweiligen Applikation jedoch kaum bemerkbaren Verzögerungen verbunden sein. Aufgrund des Umstands, dass eine feste Reihenfolge der Prozessabschnitte nicht vorgegeben ist, ist dies jedoch unvermeidbar.

In einer weiteren bevorzugten Ausgestaltung der vorliegenden Erfindung ist der Rechner derart ausgebildet, dass er aufgrund der Ausführung des Ressourcenverwaltungsprogramms für die jeweilige Applikation unabhängig voneinander die Ressourcen für mehrere Prozessabschnitte verwaltet. Dies ermöglicht eine erheblich größere Flexibilität bei der Zuordnung von Ressourcen zur jeweiligen Applikation. Insbesondere ermöglicht diese Vorgehensweise einen etwa erforderlichen Datentransfer von den virtuellen Maschinen des momentan ausgeführten Prozessabschnitts zu den virtuellen Maschinen des als nächstes auszuführenden Prozessabschnitts.

Beispielsweise ist es dadurch möglich, dass der Zeitpunkt für mindestens einen Prozessabschnitt bereits vor dem Eintreten der jeweiligen Freigabebedingung liegt. Dadurch kann erreicht werden, dass völlig stoßfrei beim Übergang von einem Prozessabschnitt zum nächsten Prozessabschnitt sofort die Ressourcen für den nächsten Prozessabschnitt zur Verfügung stehen.

Es ist insbesondere möglich, dass der Zeitpunkt durch einen Zeitablauf bestimmt ist, gerechnet ab dem Beginn des Ausführens des unmittelbar vor dem Prozessabschnitt, für den der Ressourcenbedarf ermittelt wird, ausgeführten Prozessabschnitts. Wenn die Dauer eines Prozessabschnitts - exakt oder zumindest in etwa - vorab bekannt ist, kann dadurch auf einfache Weise erreicht werden, dass rechtzeitig vor Beenden eines bestimmten Prozessabschnitts die Ressourcen für den nächsten Prozessabschnitt absolut verzögerungsfrei zur Verfügung stehen.

Beispielsweise ist es möglich,
- dass die Prozessabschnitte von der jeweiligen Applikation in einer vorbestimmten Reihenfolge ausgeführt werden,
- dass innerhalb der Reihenfolge der Prozessabschnitte auf mindestens einen ersten, automatisiert ausgeführten Prozessabschnitt ein zweiter Prozessabschnitt folgt, in dem die jeweilige Applikation mit dem Benutzer interagiert, und
- dass der Rechner aufgrund der Ausführung des Ressourcenverwaltungsprogramms zumindest die Ressourcen für den zweiten Prozessabschnitt vor dem Beenden der Ausführung des ersten Prozessabschnitts anfordert.

Beispielsweise können die Applikationen Programme sein, mittels derer Bilddaten von Patienten befundet werden. In diesem Fall werden dem Benutzer (beispielsweise einem Arzt) in einer vorbestimmten Reihenfolge die Bilddaten der Patienten vorgegeben. Der Arzt ruft die Bilddaten des ersten Patienten auf. Sodann wird eine Vorverarbeitung der Bilddaten durchgeführt. Die Vorverarbeitung erfolgt oftmals automatisiert. Auf die Vorverarbeitung erfolgt die Visualisierung der Bilddaten. In diesem Stadium reagiert die Applikation in der Regel interaktiv auf Vorgaben des Benutzers. Insbesondere die Visualisierung bedarf oftmals erheblicher Ressourcen. Sodann erfolgen das Erstellen und Zuordnen eines Reports zu den Bilddaten und die Archivierung. Die Vorverarbeitung kann mit dem ersten, automatisiert ausgeführten Prozessabschnitt korrespondieren. Die Visualisierung kann mit dem zweiten Prozessabschnitt korrespondieren. Das Erstellen und Zuordnen eines Reports zu den Bilddaten und die Archivierung können alternativ Bestandteil des zweiten Prozessabschnitts sein oder - bevorzugt - mit (mindestens) einem weiteren Prozessabschnitt korrespondieren. Nach der Ausführung der Prozessabschnitte mit den Bilddaten des ersten Patienten werden dieselben Prozessabschnitte erneut durchgeführt, diesmal jedoch mit den Bilddaten eines zweiten Patienten. Danach wird das Ganze mit den Bilddaten eines dritten Patienten, eines vierten Patienten usw. wiederholt.

Es ist also beispielsweise möglich, dass die Prozessabschnitte nicht nur von der jeweiligen Applikation in einer vorbestimmten Reihenfolge ausgeführt werden, sondern darüber hinaus die Reihenfolge der Prozessabschnitte iterativ abgearbeitet wird. In diesem Fall wird beispielsweise in jeder Iteration mittels der Reihenfolge der Prozessabschnitte von der jeweiligen Applikation jeweils ein bestimmter Teil der Nutzdaten bearbeitet, so dass die Teile der Nutzdaten eine Sequenz bilden. Wenn in einem derartigen Fall innerhalb der Reihenfolge der Prozessabschnitte der jeweiligen Applikation auf mindestens einen ersten, automatisiert ausgeführten Prozessabschnitt ein zweiter Prozessabschnitt folgt, in dem die jeweilige Applikation mit dem Benutzer interagiert, ist es möglich, dass der Rechner aufgrund der Ausführung des Ressourcenverwaltungsprogramms bereits während des Ausführens des zweiten Prozessabschnitts einer bestimmten Iteration den Ressourcenbedarf für den ersten Prozessabschnitt der nächsten Iteration ermittelt, bei der Cloud die entsprechenden Ressourcen anfordert und die von der Cloud zugeteilten Ressourcen dem ersten Prozessabschnitt der nächsten Iteration zuordnet.

Es ist möglich, dass der Rechner die Ressourcen für den ersten Prozessabschnitt der nächsten Iteration aufgrund einer Anforderung durch die jeweilige Applikation ermittelt, anfordert und der jeweiligen Applikation zuordnet. Alternativ ist es möglich, dass der Rechner dies aufgrund der Ausführung des Ressourcenverwaltungsprogramms direkt und unmittelbar tut.

Unabhängig davon, ob der Rechner die Ressourcen aufgrund der Ausführung des Ressourcenverwaltungsprogramms direkt und unmittelbar anfordert oder ob er dies aufgrund einer Anforderung durch die jeweilige Applikation tut, ist es durch diese Vorgehensweise möglich, dass die jeweilige Applikation bereits während der Ausführung des zweiten Prozessabschnitts der jeweiligen Iteration automatisiert für die nächste Iteration bereits den ersten Prozessabschnitt ausführt. Wenn der zweite Prozessabschnitt, in dem die jeweilige Applikation mit dem Benutzer interagiert, beendet ist, kann der Benutzer der jeweiligen Applikation daher - gegebenenfalls nach Ausführung des jeweiligen weiteren Prozessabschnitts bzw. nach Ausführung der jeweiligen weiteren Prozessabschnitte - sofort für den nächsten Teil der Nutzdaten mit dem zweiten Prozessabschnitt fortfahren. Wartezeiten für den Benutzer, die anderenfalls anfallen würden, können damit reduziert werden. Zeitdauern, die für das Ausführen des jeweiligen ersten Prozessabschnitts bzw. das Ausführen des jeweiligen zweiten Prozessabschnitts benötigt werden, können im Rechner beispielsweise aufgrund von von einem Administrator vorgegebenen Erfahrungswerten oder anhand einer Überwachung der Prozessabschnitte bekannt sein.

In einer besonders bevorzugten Ausgestaltung der vorliegenden Erfindung erfasst der Rechner aufgrund der Ausführung des Ressourcenverwaltungsprogramms die Ausnutzung der der jeweiligen Applikation zugeteilten Ressourcen und führt die Applikationsdaten anhand der Ausnutzung der der jeweiligen Applikation zugeteilten Ressourcen nach. Falls die Applikationsdaten die Prozessdaten umfassen, gilt diese Aussage vorzugsweise für die Prozessdaten. Aufgrund des Nachführens der Applikationsdaten (bzw. der Prozessdaten) ist es insbesondere möglich, die Applikationsdaten bzw. Prozessdaten zu optimieren.

Es ist möglich, dass ein und dieselbe Applikation von mehreren Arbeitsplätzen aus aufgerufen wird. In diesem Fall wird an jedem Arbeitsplatz eine Instanz der jeweiligen Applikation ausgeführt. Vorzugsweise sind die Applikationsdaten einzelnen Instanzen der jeweiligen Applikation individuell zugeordnet. Dadurch insbesondere ist es möglich, die Applikationsdaten für die einzelnen Instanzen individuell zu optimieren.

Es ist möglich, dass der Rechner aufgrund der Ausführung des Ressourcenverwaltungsprogramms von der jeweiligen Applikation eine jeweilige Benutzeridentifikation entgegennimmt und bei der Ermittlung des jeweiligen Ressourcenbedarfs die jeweilige Benutzeridentifikation berücksichtigt. Dadurch ist es beispielsweise möglich, für Benutzer, für die bestimmte Handlungsweisen typisch sind, welche einen anderen als den normalen Ressourcenbedarf aufweisen, den für die jeweilige Applikation ermittelten Ressourcenbedarf entsprechend anzupassen.

In analoger Weise ist es möglich, dass der Rechner aufgrund der Ausführung des Ressourcenverwaltungsprogramms von den Applikationen eine jeweilige Nutzdatenidentifikation entgegennimmt und bei der Ermittlung des jeweiligen Ressourcenbedarfs die jeweilige Nutzdatenidentifikation berücksichtigt. Dadurch ist es beispielsweise möglich, für Nutzdaten, für deren Bearbeitung ein anderer als der normale Ressourcenbedarf erforderlich ist oder gewünscht wird, den für die jeweilige Applikation ermittelten Ressourcenbedarf entsprechend anzupassen.

Es ist weiterhin möglich, dass der Rechner aufgrund der Ausführung des Ressourcenverwaltungsprogramms von der jeweiligen Applikation einen jeweiligen Sonderbefehl entgegennimmt und dass der Rechner bei der Ermittlung des jeweiligen Ressourcenbedarfs den jeweiligen Sonderbefehl berücksichtigt. Der Sonderbefehl wird der jeweiligen Applikation in der Regel direkt vom Benutzer vorgegeben und von der Applikation dann an den Rechner weitergeleitet. Alternativ kann der Sonderbefehl von der Applikation selbst ermittelt werden. Beispielsweise kann die Applikation Zeiten ermitteln, die für die Ausführung bestimmter Prozessabschnitte benötigt werden und den Sonderbefehl ausgeben, wenn diese Zeiten außerhalb vorbestimmter Korridore liegen. Die Vorgabe des Sonderbefehls kann beispielsweise bewirken, dass der Applikation das doppelte des normalerweise ermittelten Ressourcenbedarfs zugeordnet wird. Alternativ kann der Sonderbefehl beispielsweise bewirken, dass - unabhängig von der Menge an der jeweiligen Applikation derzeit zugeordneten Ressourcen - der jeweiligen Applikation eine vorbestimmte Anzahl an weiteren virtuellen Maschinen vorbestimmter Größe zusätzlich zugeordnet wird. Dies kann beispielsweise sinnvoll sein, wenn vom Benutzer Rechenoperationen angefordert werden, die außergewöhnlich rechenintensiv sind. In diesem Fall wird die Zuordnung der zusätzlichen virtuellen Maschinen beibehalten, bis die rechenintensiven Rechenoperationen abgeschlossen sind. Danach wird die Zuordnung wieder aufgegeben. Weiterhin erfolgt in diesem Fall, soweit erforderlich, innerhalb der Cloud ein Datentransfer von den der jeweiligen Applikation momentan zugeordneten Ressourcen zu den aufgrund des Sonderbefehls zusätzlich zugeordneten Ressourcen.

Die Aufgabe wird weiterhin durch ein Ressourcenverwaltungsprogramm mit den Merkmalen des Anspruchs 13 gelöst. Erfindungsgemäß ist ein Ressourcenverwaltungsprogramm der eingangs genannten Art derart ausgestaltet, dass die Abarbeitung des Maschinencodes durch den Rechner des Rechnerverbunds bewirkt, dass der Rechner den Rechnerverbund gemäß einem erfindungsgemäßen Betriebsverfahren verwaltet.

Die Aufgabe wird weiterhin durch einen Rechnerverbund mit den Merkmalen des Anspruchs 14 gelöst. Erfindungsgemäß ist bei einem Rechnerverbund der eingangs genannten Art das Ressourcenverwaltungsprogramm erfindungsgemäß ausgebildet, der Rechner also mit einem erfindungsgemäßen Ressourcenverwaltungsprogramm programmiert.
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Rechnerverbund und eine mit dem Rechnerverbund über das Internet verbundene Cloud,
- FIG 2: ein Ablaufdiagramm,
- FIG 3: ein weiteres Ablaufdiagramm,
- FIG 4: ein Zeitdiagramm mit mehreren Prozessabschnitten,
- FIG 5: ein weiteres Ablaufdiagramm,
- FIG 6: ein weiteres Ablaufdiagramm und
- FIG 7: ein weiteres Ablaufdiagramm.

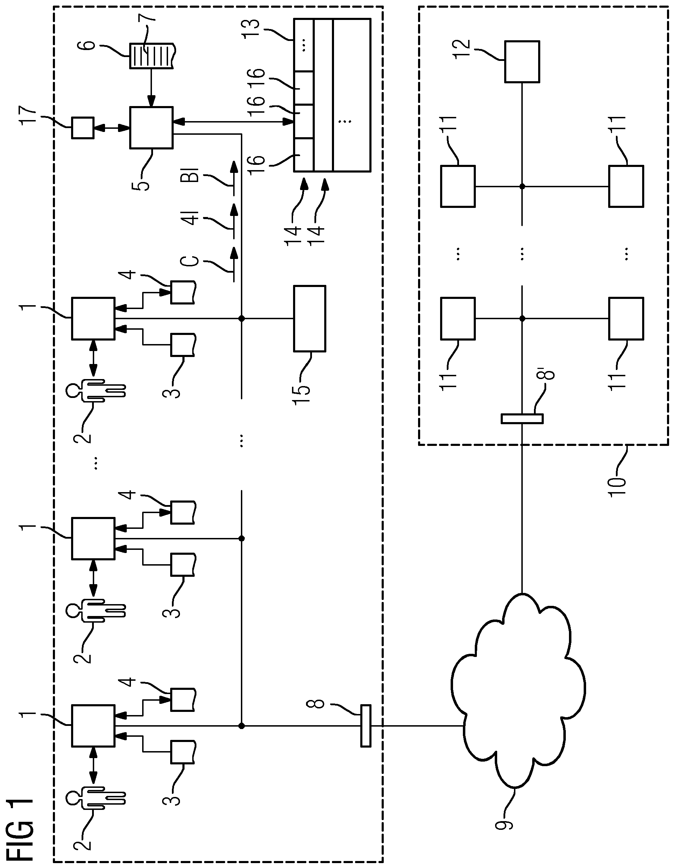

Gemäß FIG 1 weist ein Rechnerverbund eine Anzahl von Arbeitsplätzen 1 auf. Die Arbeitsplätze 1 sind Rechnerarbeitsplätze, welche jeweils mindestens ein Terminal, in der Regel sogar einen eigenen PC oder dergleichen, umfassen. Über die Arbeitsplätze 1 kann ein jeweiliger Benutzer 2 eine jeweilige Applikation 3 (= ein Computerprogramm) aufrufen und ausführen. Durch die Ausführung der jeweiligen Applikation 3 werden jeweilige Nutzdaten 4 bearbeitet. Minimal ist lediglich ein einziger Arbeitsplatz 1 vorhanden, an dem eine einzige Applikation 3 ausgeführt wird. In der Regel ist die Anzahl an Arbeitsplätzen 1 jedoch größer - oftmals sogar erheblich größer - als 1. Die Anzahl an Applikationen 3 pro Arbeitsplatz 1 ist in der Regel relativ niedrig. Insbesondere bewegt sie sich in der Regel im einstelligen Bereich.

Bei dem Rechnerverbund kann es sich beispielsweise um ein Rechenzentrum oder um die Rechner einer Forschungs- oder Entwicklungsabteilung einer Firma handeln. Auch kann es sich bei dem Rechnerverbund um die verschiedenen Rechner eines Krankenhauses oder dergleichen handeln.

Der Rechnerverbund weist weiterhin einen Rechner 5 auf, nachfolgend als Verbundrechner bezeichnet. Der Verbundrechner 5 führt ein Ressourcenverwaltungsprogramm 6 aus. Das Ressourcenverwaltungsprogramm 6 umfasst Maschinencode 7, der von dem Rechner 5 unmittelbar ausführbar ist. Die Abarbeitung des Maschinencodes 7 (hiermit synonym: Die Ausführung des Ressourcenverwaltungsprogramms 6) durch den Verbundrechner 5 bewirkt, dass der Verbundrechner 5 ein Betriebsverfahren ausführt, aufgrund dessen der Verbundrechner 5 den Rechnerverbund gemäß einem Betriebsverfahren verwaltet, das nachstehend näher erläutert wird.

In der Regel handelt es sich bei dem Verbundrechner 5 um einen von den Arbeitsplätzen 1 verschiedenen Rechner. Es ist jedoch im Einzelfall möglich, dass es sich um einen der PCs eines der Arbeitsplätze 1 handelt. In der Regel verwaltet der Verbundrechner 5 weiterhin viele Arbeitsplätze 1 und viele Applikationen 3. Es ist im Einzelfall jedoch auch möglich, dass der Verbundrechner 5 nur einen einzigen Arbeitsplatz 1, eventuell sogar nur eine einzige Applikation 3 verwaltet.

Der Rechnerverbund steht über (mindestens) eine Schnittstelle 8 mit dem Internet oder World Wide Web 9 in Verbindung. Nachfolgend wird der Einfachheit halber stets der Begriff Internet verwendet. Mit dem Internet 9 ist über eine weitere Schnittstelle 8' weiterhin eine Cloud 10 verbunden. Die Cloud 10 umfasst eine Vielzahl von Ressourcen 11, welche über die Schnittstelle 8' mit anderen Rechnern kommunizieren können. Die Ressourcen 11 bestehen beispielsweise aus jeweils einer virtuellen Maschine, die ihrerseits jeweils eine vorbestimmte Anzahl von Rechnern der Cloud 10 umfassen. Bezüglich der Bedeutung der Begriffe "Rechner der Cloud 10" und "virtuelle Maschinen" wird auf die Ausführungen in der Beschreibungseinleitung zum Stand der Technik verwiesen. Es ist möglich, dass die virtuellen Maschinen alle dieselbe Größe aufweisen. Alternativ können die virtuellen Maschinen in Gruppen aufgeteilt sein, wobei die virtuellen Maschinen innerhalb der jeweiligen Gruppe alle dieselbe Größe aufweisen, von Gruppe zu Gruppe gesehen jedoch unterschiedliche Größen aufweisen.

Prinzipiell können die Ressourcen 11 mit beliebigen Rechnern kommunizieren, die mit dem Internet 9 verbunden sind. Vorliegend kommt es auf die Kommunikation mit den Arbeitsplätzen 1 und dem Rechner 5 des Rechnerverbundes an. Zur Zuordnung von Ressourcen 11 zu einem bestimmten Rechner oder einem Rechnerverbund umfasst die Cloud 10 weiterhin einen Rechner 12 auf, der die Ressourcen 11 der Cloud 10 verwaltet. Der Rechner 12 wird nachfolgend als Cloudrechner bezeichnet. Die Funktion und Wirkungsweise des Cloudrechners 12 ist so wie im Stand der Technik auch. Sie ist nicht Gegenstand der vorliegenden Erfindung.

Der Verbundrechner 5 führt sein Betriebsverfahren aufgrund der Ausführung des Ressourcenverwaltungsprogramms 6 aus. Dies wird nachstehend ständig vorausgesetzt, auch wenn es nicht jedes Mal explizit erwähnt wird. Weiterhin führt der Verbundrechner 5 das Ressourcenverwaltungsprogramm 6 automatisch aus. Eine Interaktion mit dem Administrator ist zur Ausführung des Ressourcenverwaltungsprogramms 6 nicht erforderlich.

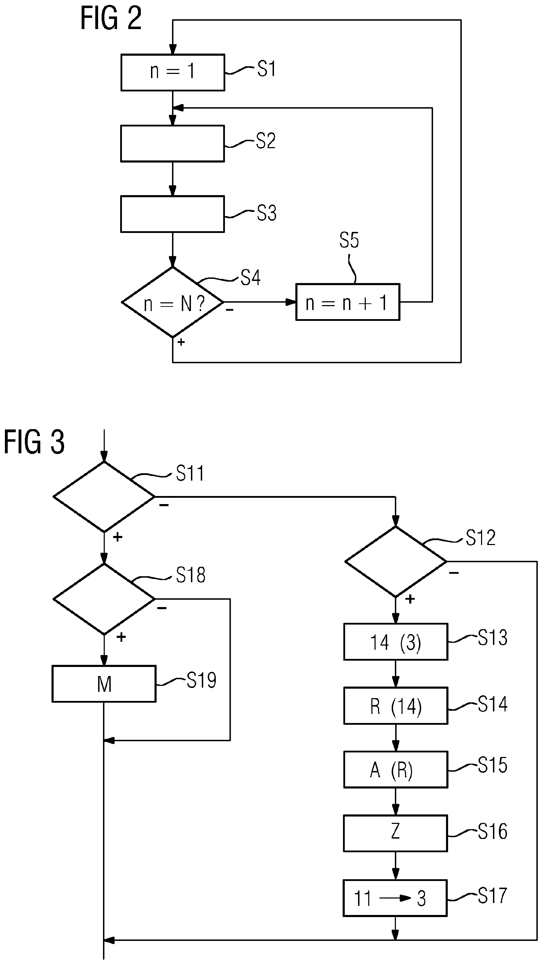

Gemäß FIG 2 verwaltet der Verbundrechner 5 die Ressourcen 11 der Cloud 10, die jeweils einem der Arbeitsplätze 1 zugeteilt sind. Gemäß FIG 2 setzt der Verbundrechner 5 in einem Schritt S1 einen Index n auf den Wert 1. In einem Schritt S2 selektiert der Verbundrechner 5 den dem Index n zugeordneten Arbeitsplatz 1. In einem Schritt S3 verwaltet der Verbundrechner 5 die dem jeweiligen Arbeitsplatz 1 zugeordneten Ressourcen 11 der Cloud 10. In einem Schritt S4 prüft der Verbundrechner 5, ob der Index n einen Endwert N erreicht hat (das heißt im Ergebnis, ob der Verbundrechner 5 den Schritt S3 für alle Arbeitsplätze 1 des Rechnerverbundes durchgeführt hat). Wenn dies nicht der Fall ist, inkrementiert der Verbundrechner 5 in einem Schritt S5 den Index n und geht sodann zum Schritt S2 zurück. Anderenfalls geht der Verbundrechner 5 zum Schritt S1 zurück.
FIG 3 zeigt eine mögliche Ausgestaltung des Schrittes S3 von FIG 2. Gemäß FIG 3 prüft der Verbundrechner 5 in einem Schritt S11, ob an dem selektierten Arbeitsplatz 1 bereits eine Applikation 3 ausgeführt wird. Wenn dies nicht der Fall ist, geht der Verbundrechner 5 zu einem Schritt S12 über. Im Schritt S12 prüft der Verbundrechner 5, ob an dem selektierten Arbeitsplatz 1 eine Applikation 3 gestartet wurde. Wenn dies der Fall ist, führt der Verbundrechner Schritte S13 bis S17 aus. Anderenfalls ist die Vorgehensweise von FIG 3 beendet.

Im Schritt S13 liest der Verbundrechner 5 aus einem Speicherbereich 13 (siehe FIG 1) Applikationsdaten 14 aus. Die Applikationsdaten 14 sind spezifisch für die jeweilige Applikation 3 vordefiniert. Die Applikationsdaten sind für den Ressourcenbedarf der jeweiligen Applikation 3 spezifisch. Sie geben insbesondere an, wieviele virtuelle Maschinen (und gegebenenfalls auch welcher Größe) für die jeweilige Applikation 3 benötigt werden. Der Speicherbereich 13 ist dem Verbundrechner 5 bzw. dem von dem Verbundrechner 5 ausgeführten Ressourcenverwaltungsprogramm 6 zugeordnet. Die Applikationsdaten 14 können beispielsweise aufgrund von Erfahrungswerten von einem Administrator (= Mensch) vorab festgelegt und in den Speicherbereich 13 eingeschrieben worden sein. Insbesondere handelt es sich bei den Applikationsdaten 14 nicht um Daten, die von der jeweiligen Applikation 3 selbst vorab festgelegt worden sind oder von der jeweiligen Applikation 3 zur Laufzeit kreiert oder modifiziert werden.

Im Schritt S14 ermittelt der Verbundrechner 5 automatisch anhand der Applikationsdaten 14 für die jeweilige Applikation 3 jeweils einen Ressourcenbedarf R. Im Schritt S15 übermittelt der Verbundrechner 5 an den Cloudrechner 12 eine Anforderung A. In der Anforderung A fordert der Verbundrechner 5 vom Cloudrechner 12 automatisch Ressourcen 11 gemäß dem im Schritt S14 ermittelten Ressourcenbedarf R an. Im Schritt S16 nimmt der Verbundrechner 5 vom Cloudrechner 12 automatisch eine Zuteilung Z von Ressourcen 11 entgegen. Die Zuteilung Z enthält insbesondere die Zugriffsdaten, die erforderlich sind, um auf die im Schritt S16 zugeteilten Ressourcen 11 zugreifen zu können. Die Zuteilung Z korrespondiert selbstverständlich mit der Anforderung A.

Im einfachsten Fall besteht die Anforderung A aus einer einzelnen, einheitlichen Anforderung virtueller Maschinen einheitlicher Größe. Die Anforderung A kann jedoch auch aus mehrere Teilanforderungen bestehen, wobei pro Teilanforderung zwar virtuelle Maschinen einheitlicher Größe angefordert werden, die Größe der virtuellen Maschinen jedoch von Teilanforderung zu Teilanforderung variieren kann.

Im Schritt S17 ordnet der Verbundrechner 5 die im Schritt S16 zugeteilten Ressourcen 11 automatisch der jeweiligen Applikation 3 zu. Beispielsweise kann der Verbundrechner 5 die Zugriffsdaten in einem vorbestimmten Speicherbereich 15 (siehe FIG 1) hinterlegen, in dem für jede Applikation 3 die jeweiligen Zugriffsdaten auf die Ressourcen 11 der jeweiligen Applikation 3 hinterlegt sind. Für jede Applikation 3 ist in diesem Fall in dem Speicherbereich 15 ein vorbestimmter Teilbereich des Speicherbereichs 15 reserviert, so dass jede Applikation 3 "weiß", wo sie ihre jeweiligen Zugriffsdaten abrufen muss.

Wenn der Verbundrechner 5 im Schritt S11 feststellt, dass an dem selektierten Arbeitsplatz 1 bereits eine Applikation 3 ausgeführt wird, geht der Verbundrechner 5 zu einem Schritt S18 über. Im Schritt S18 prüft der Verbundrechner 5, ob eine Freigabebedingung für die der jeweiligen Applikation 3 zugeordneten Ressourcen 11 eingetreten ist. Die Freigabebedingung kann auf verschiedene Art ausgestaltet sein. Unabhängig von ihrer konkreten Ausgestaltung ist die Freigabebedingung jedoch zwar von der jeweiligen Applikation 3 abhängig, aber nicht von anderen Applikationen 3.

Wenn die Freigabebedingung nicht erfüllt ist, ergreift der Verbundrechner 5 keine weitergehenden Maßnahmen. Insbesondere behält der Verbundrechner 5 somit die Zuordnung der der jeweiligen Applikation 3 zugeordneten Ressourcen 11 zur jeweiligen Applikation 3 bei. Wenn die Freigabebedingung hingegen erfüllt ist, geht der Verbundrechner 5 zu einem Schritt S19 über. Im Schritt S19 gibt der Verbundrechner 5 die der jeweiligen Applikation 3 zugeordneten Ressourcen 11 automatisch an die Cloud 10 zurück. Beispielsweise kann der Verbundrechner 5 im Speicherbereich 15 die Einträge für die jeweilige Applikation 3 löschen und eine Meldung M an den Cloudrechner 12 übermitteln, so dass der Cloudrechner 12 die entsprechenden Ressourcen 11 nicht mehr länger für die jeweilige Applikation 3 reserviert.

Der Verbundrechner 5 führt die obenstehend in Verbindung mit FIG 3 erläuterte Vorgehensweise für jeden Arbeitsplatz 1 und damit auch für jede laufende Applikation 3 unabhängig von den anderen Arbeitsplätzen 1 und den anderen Applikationen 3 aus. Im Ergebnis verwaltet der Verbundrechner 5 somit jede Applikation 3 und die der jeweiligen Applikation 3 zugeteilten Ressourcen 11 der Cloud 10 unabhängig von den anderen Applikationen 3 und den diesen Applikationen 3 zugeordneten Ressourcen 11 der Cloud 10.

FIG 3 zeigt die einfachste Ausgestaltung der vorliegenden Erfindung. Im Rahmen der Vorgehensweise gemäß FIG 3 ist die im Rahmen des Schrittes S18 überprüfte Freigabebedingung der jeweiligen Applikation 3 das Beenden der jeweiligen Applikation 3. In diesem Fall ergreift der Verbundrechner 5 bezüglich der jeweiligen Applikation 3 und deren Ressourcen 11 über die Freigabe der Ressourcen 11 hinaus keine weiteren Maßnahmen. Bereits diese Vorgehensweise ist gegenüber der Vorgehensweise des Standes der Technik von Vorteil, weil jeder Applikation 3 zu jedem Zeitpunkt eine prinzipiell frei wählbare, vor allem aber feste und definierte Menge an Ressourcen 11 zugeordnet ist und diese Menge an Ressourcen 11 unabhängig von anderen Applikationen 3 ist. In vielen Fällen kann die Vorgehensweise von FIG 3 jedoch noch weiter verbessert werden. Dies wird nachfolgend in Verbindung mit den weiteren FIG näher erläutert.

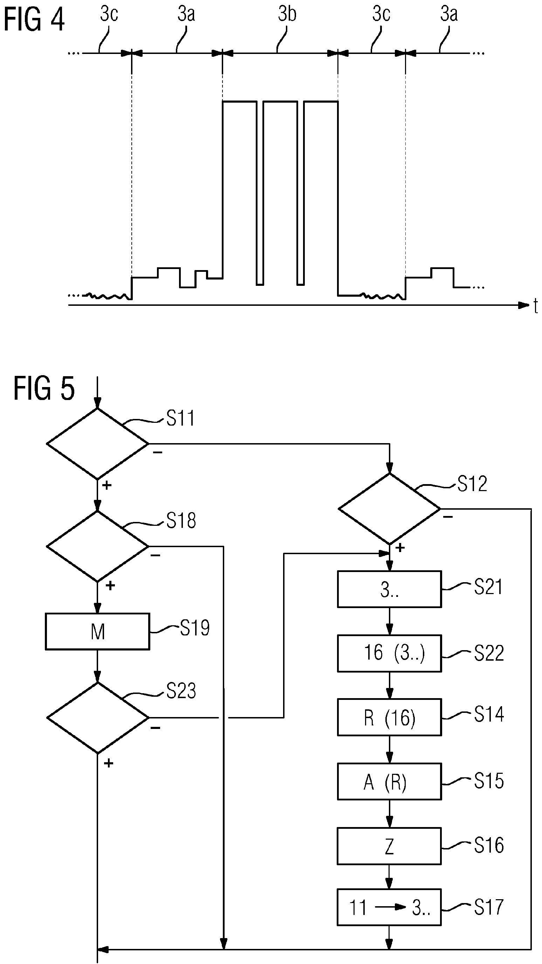

Insbesondere weisen die Applikationen 3 - dargestellt ist dies in FIG 4 beispielhaft für eine der Applikationen 3 - in der Regel jeweils mehrere Prozessabschnitte 3a bis 3c auf, die im Laufe der Zeit t nacheinander ausgeführt werden. Die in FIG 4 dargestellte Anzahl von drei Prozessabschnitten 3a bis 3c ist jedoch rein beispielhaft. Es können also nach Bedarf auch mehr oder weniger Prozessabschnitt 3a bis 3c vorhanden sein. Von Prozessabschnitt 3a bis 3c zu Prozessabschnitte 3a bis 3c variiert die erforderliche Rechenleistung oftmals erheblich. Beispielsweise kann entsprechend der Darstellung in FIG 4 in einem ersten Prozessabschnitt 3a eine mittlere Rechenleistung erforderlich sein, in einem zweiten Prozessabschnitt 3b eine hohe Rechenleistung und in einem weiteren Prozessabschnitt 3c eine niedrige Rechenleistung.

Beispielsweise kann im Rahmen einer medizinischen Applikation eine Auswertung von zuvor mittels einer bildgebenden medizintechnischen Modalität erfassten Patienten-Bilddaten erfolgen. In diesem Fall kann beispielsweise der erste Prozessabschnitt 3a mit einer Vorverarbeitung der erfassten Patienten-Bilddaten (= Nutzdaten in diesem Beispiel) korrespondieren. Die erfassten Patienten-Bilddaten werden also derart aufbereitet, dass sie nach dem Aufbereiten mittels üblicher Visualisierungswerkzeuge von einem Arzt (= Benutzer einer derartigen Applikation) im zweiten Prozessabschnitt 3b bearbeitet und dargestellt werden können. Im weiteren Prozessabschnitt 3c kann sodann ein Reporting, verbunden mit einer Archivierung in einem PACS, erfolgen.

Wenn im Falle voneinander abgrenzbarer Prozessabschnitte 3a bis 3c die Ressourcen 11 der Cloud 10 beim Starten der jeweiligen Applikation 3 einmalig angefordert werden und danach bis zum Beenden der jeweiligen Applikation 3 unverändert beibehalten werden, erfolgt in den weniger rechenintensiven Prozessabschnitten 3a und 3c eine nur unzureichende Ausnutzung der zugeteilten Ressourcen 11 der Cloud 10 und/oder es wird in dem rechenintensiven Prozessabschnitt 3b nur eine unzureichende Rechenleistung zur Verfügung gestellt. Dies kann durch die nachfolgend in Verbindung mit FIG 5 erläuterte Vorgehensweise vermieden werden.

FIG 5 geht aus von der Vorgehensweise von FIG 3. FIG 5 enthält zunächst ebenfalls die Schritte S11 und S12.

Im Rahmen der Ausgestaltung gemäß FIG 5 umfassen die für die jeweilige Applikation 3 vordefinierten Applikationsdaten 14 gemäß FIG 1 für jeden der Prozessabschnitte 3a bis 3c jeweilige Prozessdaten 16. Der Schritt S13 ist daher durch Schritte S21 und S22 ersetzt. Im Schritt S21 ermittelt der Verbundrechner 5 den neu auszuführenden Prozessabschnitt 3a bis 3c. Im Schritt S22 liest der Verbundrechner 5 aus dem Speicherbereich 13 einen Teil der Applikationsdaten 14 aus, nämlich die Prozessdaten 16 für den neu auszuführenden Prozessabschnitt 3a bis 3c. Die weiteren Schritte S14 bis S17 sind vom Ansatz her gegenüber FIG 3 unverändert, basieren jedoch auf den im Schritt S22 ausgelesenen Prozessdaten 16. Im Ergebnis ermittelt der Verbundrechner 5 somit aufgrund der Ausführung des Ressourcenverwaltungsprogramms 6 den Ressourcenbedarf R anhand der Prozessdaten 16 des jeweils auszuführenden Prozessabschnitts 3a bis 3c.

Die Schritte S18 und S19 sind ebenfalls vorhanden. Bei der Ausgestaltung gemäß FIG 5 ist die Freigabebedingung jedoch das Beenden des Ausführens des jeweils ausgeführten Prozessabschnitts 3a bis 3c. Weiterhin ist dem Schritt S19 ein Schritt S23 nachgeordnet. Im Schritt S23 prüft der Verbundrechner 5, ob die Applikation 3 beendet wird. Wenn dies der Fall ist, ergreift der Verbundrechner 5 keine weiteren Maßnahmen. Anderenfalls geht der Verbundrechner 5 zum Schritt S21 über. Bei der erneuten Ausführung des Schrittes S21 wird jedoch der neu auszuführende Prozessabschnitt 3a bis 3c ermittelt und werden darauf aufbauend die Maßnahmen der darauf folgenden Schritte S22 sowie S14 bis S17 ergriffen.

Durch die Vorgehensweise von FIG 5 kann insbesondere erreicht werden, dass für jeden Prozessabschnitt 3a bis 3c die bei der Cloud 10 angeforderten Ressourcen 11 auf die erforderliche Rechenleistung des jeweiligen Prozessabschnitts 3a bis 3c abgestimmt sind. Beispielsweise können von der Cloud 10 für den Prozessabschnitt 3a zwei mittlere virtuelle Maschinen angefordert werden, für den Prozessabschnitt 3b drei große virtuelle Maschinen und für den Prozessabschnitt 3c eine kleine virtuelle Maschine. Selbstverständlich sind jedoch auch andere Anforderungen möglich.

In der Regel ist die Applikation 3 eine zustandsbehaftete Applikation. Um in einem derartigen Fall die Nutzdaten 4 zu erhalten, muss die Vorgehensweise gemäß Figur 5 modifiziert werden. Eine mögliche Modifikation besteht darin, den Schritt S23 vor dem Schritt S19 auszuführen. In diesem Fall kann im JA-Zweig des Schrittes S23 direkt zum Schritt S19 übergegangen werden. Im NEIN-Zweig des Schrittes S23 wird in diesem Fall vor dem Schritt S19 ein Schritt ausgeführt, welcher der Gesamtheit der Schrittes S21, S22 sowie S14 bis S17 entspricht und in dem zusätzlich der erforderliche Datentransfer von den der jeweiligen Applikation 3 momentan zugeordneten Ressourcen 11 zu den neu angeforderten Ressourcen 11 erfolgt. Eine alternative Modifikation besteht darin, die Vorgehensweise von FIG 3 ZUSÄTZLICH zur Vorgehensweise von FIG 5 auszuführen. In diesem Fall wird immer Rahmen der ZUSÄTZLICH ausgeführten Vorgehensweise von FIG 3 der jeweiligen Applikation 3 einmalig eine Ressource 11 angefordert (beispielsweise eine kleine virtuelle Maschine). Diese Ressource 11 bleibt der jeweiligen Applikation 3 permanent zugeordnet, bis die jeweilige Applikation 3 beendet wird. In diesem Fall läuft auf dieser Ressource 11 sozusagen eine Mutterapplikation. Von dieser Mutterapplikation aus werden, soweit erforderlich, beim Zuteilen von Ressourcen 11 im Rahmen des Schrittes S17 innerhalb der Cloud 10 Nutzdaten 4 an die im Rahmen der Vorgehensweise von FIG 5 neu angeforderten Ressourcen 11 übermittelt. Weiterhin werden von der Mutterapplikation von den den einzelnen Prozessabschnitten 3a bis 3c zugeordneten Ressourcen 11 Nutzdaten 4 entgegengenommenen und zur späteren nochmaligen Verwendung gespeichert. Unabhängig davon, welche dieser Vorgehensweisen realisiert wird, erfolgt dies für den Benutzer 2 der jeweiligen Applikation 3 völlig transparent.

Im Falle der Ausgestaltung gemäß FIG 5 prüft der Verbundrechner 5 zum Zeitpunkt des Eintretens der jeweiligen Freigabebedingung, ob die jeweilige Applikation 3 fortgesetzt oder beendet wird. Diese Ausgestaltung ist stets realisierbar. Die damit verbundenen Verzögerungen zwischen dem Freigeben der Ressourcen 11 der Cloud 10 des einen Prozessabschnitts 3a bis 3 und dem Anfordern und Zuteilen der Ressourcen 11 der Cloud 10 für den nachfolgenden Prozessabschnitt 3a bis 3c sind in der Regel vernachlässigbar klein. Weiterhin ist es in diesem Fall lediglich erforderlich, dass der Verbundrechner 5 derart ausgebildet ist, dass er aufgrund der Ausführung des Ressourcenverwaltungsprogramms 6 für die jeweilige Applikation 3 zu jedem Zeitpunkt nur die Ressourcen 11 für einen einzigen Prozessabschnitt 3a bis 3c verwaltet. Lediglich die zusätzliche Verwaltung der Ressourcen 11 der Mutterapplikation oder eine kurzzeitige Verwaltung der Ressourcen 11 für zwei unmittelbar aufeinanderfolgende Prozessabschnitte 3a bis 3c zum Zwecke des Datentransfers vom einen Prozessabschnitt 3a bis 3c zum nächsten Prozessabschnitt 3a bis 3c ist erforderlich. Es ist jedoch auch möglich, dass der Verbundrechner 5 derart ausgebildet ist, dass er aufgrund der Ausführung des Ressourcenverwaltungsprogramms 6 für die jeweilige Applikation 3 unabhängig voneinander die Ressourcen 11 für mehrere Prozessabschnitte 3a bis 3c verwaltet. In diesem Fall ist es insbesondere möglich, dass der Zeitpunkt, zu dem für einen Prozessabschnitt 3a bis 3c die Ermittlung, Anforderung und Zuteilung der Ressourcen 11 erfolgt, bereits vor dem Eintreten der jeweiligen Freigabebedingung liegt. Diese Maßnahmen können von dem Verbundrechner 5 also bereits ergriffen werden, während noch ein anderer Prozessabschnitt 3a bis 3c ausgeführt wird.

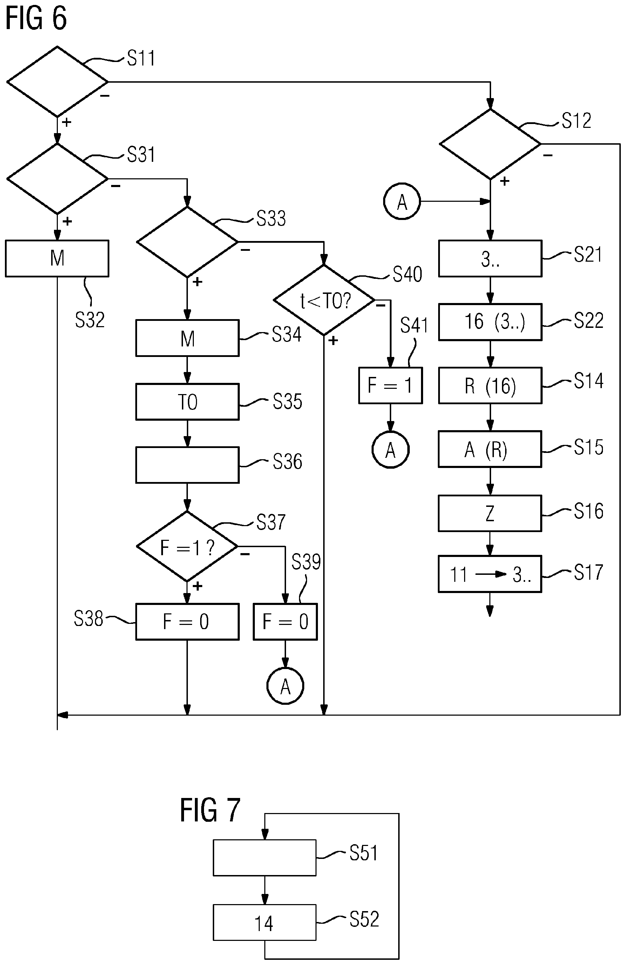

So ist es beispielsweise möglich, die Vorgehensweise von FIG 5 entsprechend der Darstellung von FIG 6 zu modifizieren.

FIG 6 umfasst die Schritte S11, S12, S14 bis S17 sowie S21 und S22 von FIG 5. Diese Schritte werden daher nachfolgend nicht nochmals erläutert.

Die Schritte S18, S19 und S23 von FIG 5 sind durch Schritte S31 bis S34 ersetzt. Der Schritt S31 korrespondiert inhaltlich mit dem Schritt S23 von FIG 5. Der Verbundrechner 5 prüft also im Schritt S31, ob die Applikation 3 beendet wird. Wenn dies der Fall ist, gibt der Verbundrechner 5 die der jeweiligen Applikation 3 zugeordneten Ressourcen 11 im Schritt S32 automatisch an die Cloud 10 zurück. Über die Freigabe der Ressourcen 11 hinaus ergreift der Verbundrechner 5 in diesem Fall keine weiteren Maßnahmen. Insbesondere ist der Stand eines Zeitgebers 17 (siehe FIG 1), den der Verbundrechner 5 für die jeweilige Applikation 3 implementiert, in diesem Fall irrelevant geworden. Im Schritt S33 prüft der Verbundrechner 5, ob der momentan ausgeführte Prozessabschnitt 3a bis 3c beendet wird. Wenn dies der Fall ist, gibt der Verbundrechner 5 die der jeweiligen Applikation 3 zugeordneten Ressourcen 11 im Schritt S34 automatisch an die Cloud 10 zurück. Die Freigabebedingung korrespondiert im Rahmen der Ausgestaltung von FIG 6 also aus einer komplexeren Bedingung als bisher, nämlich dem Beenden der Applikation 3 als Ganzes oder dem Beenden des momentan ausgeführten Prozessabschnitts 3a bis 3c.

Weiterhin setzt der Verbundrechner 5 in einem Schritt S35 für den jetzt neu beginnenden Prozessabschnitt 3a bis 3c, also für den Prozessabschnitt 3a bis 3c, der auf den soeben beendeten Prozessabschnitt 3a bis 3c folgt, eine Zeitgrenze T0 fest. Die Zeitgrenze T0 kann für alle Prozessabschnitte 3a bis 3c einheitlich sein. Vorzugsweise ist sie jedoch individuell für den jeweiligen Prozessabschnitt 3a bis 3c definiert. In einem Schritt S36 startet der Verbundrechner 5 sodann den Zeitgeber 17.

In einem Schritt S37 prüft der Verbundrechner 5, ob ein Flag F gesetzt ist. Wenn dies der Fall ist, wurden die Schritte S21, S22 und S14 bis S17 für den jetzt neu beginnenden Prozessabschnitt 3a bis 3c bereits ausgeführt. In diesem Fall sind keine weiteren Maßnahmen erforderlich. Der Verbundrechner 5 setzt daher lediglich in einem Schritt S38 das Flag F zurück. Anderenfalls setzt der Verbundrechner 5 zwar ebenfalls in einem Schritt S39 das Flag F zurück. Im Gegensatz zum Schritt S38, von dem ausgehend keine weiteren Maßnahmen ergriffen werden, geht der Verbundrechner 5 ausgehend vom Schritt S39 jedoch zum Schritt S21 über.

Wenn die Freigabebedingung nicht erfüllt ist, also weder die Applikation 3 als Ganzes noch der momentan ausgeführte Prozessabschnitt 3a bis 3c beendet wird, geht der Verbundrechner 5 zu einem Schritt S40 über. Im Schritt S40 prüft der Verbundrechner 5, ob der Zeitgeber 17 noch läuft, also die Zeitgrenze T0 noch nicht erreicht hat. Wenn dies der Fall ist, ergreift der Verbundrechner 5 keine weitergehenden Maßnahmen. Anderenfalls geht der Verbundrechner 5 zu einem Schritt S41 über. Im Schritt S41 setzt der Verbundrechner 5 das Flag F. Sodann geht der Verbundrechner 5 zum Schritt S21 über.

Durch die Vorgehensweise von FIG 6 wird erreicht, dass der Verbundrechner 5 in dem Fall, dass der Zeitgeber 17 abläuft, automatisch und zwangsweise die Ressourcen 11 für den als nächstes auszuführenden Prozessabschnitt 3a bis 3c ermittelt, anfordert und dem als nächstes auszuführenden Prozessabschnitt 3a bis 3c zuordnet. Dies gilt auch dann, wenn der momentan ausgeführte Prozessabschnitt 3a bis 3c noch ausgeführt wird. Durch das Flag F und die Schritte S39 bis S41 wird erreicht, dass die Zuordnung der Ressourcen 11 für den als nächstes auszuführenden Prozessabschnitt 3a bis 3c auch dann erfolgt, wenn (ausnahmsweise) der Zeitgeber 17 zu dem Zeitpunkt, zu dem der momentan ausgeführte Prozessabschnitt 3a bis 3c beendet wird, noch nicht abgelaufen ist.

Die Bestimmung der Zeitgrenze T0 für die einzelnen Prozessabschnitte 3a bis 3c kann auf Erfahrungswerten beruhen. Alternativ ist es möglich, dass die Zeitgrenze T0 für einige oder alle der Prozessabschnitte 3a bis 3c ohne weiteres ermittelt werden kann, sei es durch Versuche, sei es durch Berechnungen. Dies gilt insbesondere dann, wenn der jeweilige Prozessabschnitt 3a bis 3c von der jeweiligen Applikation 3 automatisiert ausgeführt wird.

Die Vorgehensweise gemäß FIG 6 hat zwei Voraussetzungen. Die eine Voraussetzung besteht darin, dass die Prozessabschnitte 3a bis 3c in einer vorbestimmten Reihenfolge ausgeführt werden. Die andere Voraussetzung besteht darin, dass der Verbundrechner 5 in der Lage ist, aufgrund der Ausführung des Ressourcenverwaltungsprogramms 6 für die jeweilige Applikation 3 unabhängig voneinander die Ressourcen 11 für mehrere Prozessabschnitte 3a bis 3c verwalten. Besonders sinnvoll ist die Vorgehensweise in Fällen, in denen innerhalb der Reihenfolge der Prozessabschnitte 3a bis 3c auf mindestens einen ersten, automatisiert ausgeführten Prozessabschnitt 3a bis 3c (gemäß dem Beispiel von FIG 4 den Prozessabschnitt 3a) ein zweiter Prozessabschnitt 3a bis 3c (gemäß dem Beispiel von FIG 4 der Prozessabschnitt 3b) folgt, in dem die jeweilige Applikation 3 mit dem Benutzer 2 interagiert. In diesem Fall kann der Verbundrechner 5 aufgrund der Ausführung des Ressourcenverwaltungsprogramms 6 insbesondere zumindest für den Prozessabschnitt 3b die Ressourcen vor dem Beenden der Ausführung des Prozessabschnitts 3a anfordern.

Wenn die Applikation 3 eine zustandsbehaftete Applikation ist, kann die Vorgehensweise gemäß FIG 6 analog zur Vorgehensweise gemäß FIG 5 modifiziert werden. Insbesondere ist es möglich, den Schritt S34 erst dann auszuführen, wenn die Zuordnung der neu angeforderten Ressourcen 11 und auch der erforderliche Datentransfer erfolgt sind. Alternativ kann auch im Rahmen der Vorgehensweise von FIG 6 zusätzlich eine Mutterapplikation verwendet werden.

In vielen Fällen werden die Prozessabschnitte 3a bis 3c von der jeweiligen Applikation 3 nicht nur in einer vorbestimmten Reihenfolge ausgeführt, sondern darüber hinaus wird die Reihenfolge der Prozessabschnitte 3a bis 3c auch iterativ abgearbeitet. Dies ist in FIG 4 dadurch angedeutet, dass die einmalige Darstellung der Prozessabschnitte 3a bis 3c durch einen zusätzlichen, zuvor ausgeführten Prozessabschnitt 3c und einen zusätzlichen, hinterher ausgeführten Prozessabschnitt 3a ergänzt ist. Weiterhin ist in vielen derartigen Fällen der Prozessabschnitt 3a ein Prozessabschnitt, der von der jeweiligen Applikation automatisiert ausgeführt wird, während der Prozessabschnitt 3b ein Prozessabschnitt ist, in dem die jeweilige Applikation 3 mit dem Benutzer 2 interagiert. Insbesondere in derartigen Fällen ist es sinnvoll, dass der Verbundrechner 5 aufgrund der Ausführung des Ressourcenverwaltungsprogramms 6 bereits während des Ausführens des zweiten Prozessabschnitts 3b einer bestimmten Iteration den Ressourcenbedarf R für den ersten Prozessabschnitt 3a der nächsten Iteration ermittelt, bei der Cloud 10 die entsprechenden Ressourcen 11 anfordert und die von der Cloud 10 zugeteilten Ressourcen 11 dem ersten Prozessabschnitt 3a der nächsten Iteration zuordnet. Dadurch ist es möglich, dass die jeweilige Applikation 3 bereits im Hintergrund (für den Benutzer 2 nicht erkennbar) den Prozessabschnitt 3a der nächsten Iteration ausführt, während der Benutzer 2 im Prozessabschnitt 3b der laufenden Iteration mit der Applikation 3 interagiert. Wenn der Benutzer 2 seine Interaktion beendet und eventuell auch der Prozessabschnitt 3c beendet ist, kann daher für die nächste Iteration der Prozessabschnitt 3a bereits beendet sein, so dass der Benutzer 2 direkt und ohne Wartezeit im Prozessabschnitt 3b der nächsten Iteration mit der Applikation 3 interagieren kann.

Es ist möglich, dass der Verbundrechner 5 für die soeben erläuterte Vorgehensweise die Anforderung A aufgrund einer entsprechenden Aufforderung durch die jeweilige Applikation 3 vornimmt. Alternativ ist es möglich, dass der Verbundrechner 5 aufgrund der Ausführung des Ressourcenverwaltungsprogramms 6 derart ausgebildet ist, dass er dies eigenständig tut.

Nachfolgend wird in Verbindung mit FIG 7 eine weitere vorteilhafte Ausgestaltung der vorliegenden Erfindung erläutert.

Diese Ausgestaltung wird nachstehend in Verbindung mit dem Grundprinzip gemäß FIG 3 erläutert.

Gemäß FIG 7 sind Schritte S51 und S52 vorhanden. Im Schritt S51 erfasst der Verbundrechner 5 aufgrund der Ausführung des Ressourcenverwaltungsprogramms 6 die Ausnutzung der der jeweiligen Applikation 3 zugeteilten Ressourcen 11 der Cloud 10. Die Erfassung kann je nach Lage des Einzelfalls während der Ausführung der jeweiligen Applikation 3 oder an deren Ende erfolgen. Beispielsweise kann der Verbundrechner 5 während der Ausführung der jeweiligen Applikation 3 vom Cloudrechner 12 abfragen, zu welchem Ausmaß die der jeweiligen Applikation 3 zugeordneten Ressourcen 11 der Cloud 10 genutzt werden. Alternativ oder zusätzlich kann der Verbundrechner 5 beispielsweise eine Zeitdauer erfassen, welche für die Ausführung der Applikation 3 erforderlich ist. Die letztgenannte Vorgehensweise ist insbesondere dann sinnvoll, wenn die Applikation 3 iterativ immer wieder ausgeführt wird. In einem Schritt S52 führt der Verbundrechner 5 sodann die Applikationsdaten 14 der der jeweiligen Applikation 3 zugeteilten Ressourcen 11 der Cloud 10 nach. Insbesondere vergleicht der Verbundrechner 5 im Rahmen des Schrittes S52 die Ausnutzung der der jeweiligen Applikation 3 zugeteilten Ressourcen 11 der Cloud 10 mit einer Sollausnutzung und erhöht oder verringert je nachdem, wie der Vergleich ausfällt, den Ressourcenbedarf R. Das Nachführen des Schrittes S52 erfolgt bei der Ausgestaltung gemäß FIG 7 nach dem Beenden der jeweiligen Applikation 3. Die Nachführung ist also für das jeweilige Ausführen der jeweiligen Applikation 3 (noch) nicht wirksam. Sie wird jedoch wirksam beim nächsten Aufruf der jeweiligen Applikation 3. Falls die jeweilige Applikation 3 iterativ ausgeführt wird, kann das Nachführen der jeweiligen Applikationsdaten 14 nach der jeweiligen Ausführung der jeweiligen Applikation 3 erfolgen. In diesem Fall wird die Nachführung auch ohne Beenden der jeweiligen Applikation 3 bei der nächsten Ausführung der jeweiligen Applikation 3 wirksam.

Die Vorgehensweise von FIG 7 ist auch mit den Ausgestaltungen der FIG 5 und 6 kombinierbar. Es ist lediglich erforderlich, die Ausnutzung der der jeweiligen Applikation 3 zugeteilten Ressourcen 11 der Cloud 10 selektiv für den jeweiligen Prozessabschnitt 3a bis 3c zu erfassen und bezüglich der Applikationsdaten 14 als Ganzes jeweils die Prozessdaten 16 des jeweiligen Prozessabschnitts 3a bis 3c nachzuführen. In diesem Fall kann weiterhin das Nachführen der Prozessdaten 16 erfolgen, sobald der jeweilige Prozessabschnitt 3a bis 3c beendet ist. Beim nächsten Ausführen des jeweiligen Prozessabschnitts 3a bis 3c kann die Nachführung dann wirksam werden.

Es ist möglich, dass dieselbe Applikation 3 von mehreren Arbeitsplätzen 1 aus aufgerufen wird. In diesem Fall wird jedem derartigen Arbeitsplatz 1 eine jeweilige Instanz der jeweiligen Applikation 3 zugeordnet. Es ist möglich, dass die Applikationsdaten 14 (mit oder ohne Aufteilung auf die Prozessdaten 16) der Applikation 3 als solcher zugeordnet sind. Insbesondere das Nachführen der Applikationsdaten 14 bzw. der Prozessdaten 16 ist jedoch dann besonders sinnvoll, wenn auch die Applikationsdaten 14 einzelnen Instanzen der jeweiligen Applikation 3 individuell zugeordnet sind. Dadurch kann beispielsweise eine Optimierung in Abhängigkeit von der tatsächlichen Handhabung der jeweiligen Applikation 3 durch den jeweiligen Benutzer 2 erfolgen. Wenn - beispielsweise - ein bestimmter Benutzer 2 immer wieder dazu neigt, im jeweiligen Prozessabschnitt 3b sehr rechenintensive Vorgänge auszuführen, können die Prozessdaten 16 für den Prozessabschnitt 3b der von diesem Benutzer 2 ausgeführten Applikation 3 einen erhöhten Ressourcenbedarf R widerspiegeln. Auch ist es möglich, die Applikationsdaten 14 bereits dann anzupassen, wenn der jeweilige Benutzer 2 sich am jeweiligen Arbeitsplatz 1 registriert. Es ist also möglich, dass der Verbundrechner 5 aufgrund der Ausführung des Ressourcenverwaltungsprogramms 6 von dem jeweiligen Arbeitsplatz 1 bzw. der jeweiligen Applikation 3 eine jeweilige Benutzeridentifikation BI (siehe FIG 1) entgegennimmt. In diesem Fall ist es möglich, dass der Verbundrechner 5 bei der Ermittlung des jeweiligen Ressourcenbedarfs R die jeweilige Benutzeridentifikation BI mit berücksichtigt.

Vielfach werden die Applikationen 3 - mit oder ohne Aufteilung der Applikationen 3 in Prozessabschnitte 3a bis 3c - iterativ immer wieder ausgeführt, wobei die jeweilige Ausführung sich durch die jeweils bearbeiteten Nutzdaten 4 unterscheiden. Analog zur Berücksichtigung der Benutzeridentifikation BI bei der Ermittlung des jeweiligen Ressourcenbedarfs R ist es möglich, dass der Verbundrechner 5 aufgrund der Ausführung des Ressourcenverwaltungsprogramms 6 von den Applikationen 3 eine jeweilige Nutzdatenidentifikation 4I entgegennimmt. In diesem Fall ist es möglich, dass der Verbundrechner 5 bei der Ermittlung des jeweiligen Ressourcenbedarfs R die jeweilige Nutzdatenidentifikation 4I mit berücksichtigt.

Weiterhin ist es möglich, dass der Verbundrechner 5 aufgrund der Ausführung des Ressourcenverwaltungsprogramms 6 von den Applikationen 3 gemäß FIG 1 einen jeweiligen Sonderbefehl C entgegennimmt. In diesem Fall ist es möglich, dass der Verbundrechner 5 bei der Ermittlung des jeweiligen Ressourcenbedarfs R den jeweiligen Sonderbefehl C mit berücksichtigt.

Zusammengefasst betrifft die vorliegende Erfindung somit folgenden Sachverhalt:
Ein Rechnerverbund weist eine Anzahl von Arbeitsplätzen 1 auf, über die ein jeweiliger Benutzer 2 unter Bearbeitung von jeweiligen Nutzdaten 4 mindestens eine jeweilige Applikation 3 ausführt. Der Rechnerverbund weist weiterhin einen Rechner 5 auf, der ein Ressourcenverwaltungsprogramm 6 ausführt. Aufgrund der Ausführung des Ressourcenverwaltungsprogramms 6 führt der Rechner 5 folgende Aktionen aus: Er ermittelt zumindest beim Starten der jeweiligen Applikation 3 automatisch anhand von für die jeweilige Applikation 3 vordefinierten Applikationsdaten 14 für die jeweilige Applikation 3 einen Ressourcenbedarf R. Er fordert bei einem Ressourcen 11 einer Cloud 10 verwaltenden Cloudrechner 12 automatisch gemäß dem ermittelten Ressourcenbedarf R Ressourcen 11 an und nimmt vom Cloudrechner 12 aufgrund der Anforderung A automatisch eine Zuteilung Z von Ressourcen 11 entgegen. Die Zuteilung Z enthält die Zugriffsdaten, die erforderlich sind, um auf die zugeteilten Ressourcen 11 zugreifen zu können. Er ordnet die aufgrund der Anforderung A für die jeweilige Applikation 3 zugeteilten Ressourcen 11 automatisch der jeweiligen Applikation 3 zu. Ab dem Zuordnen der Ressourcen 11 zur jeweiligen Applikation 3 überwacht er automatisch, ob eine von der jeweiligen Applikation 3, aber nicht von anderen Applikationen 3 abhängige jeweilige Freigabebedingung für die der jeweiligen Applikation 3 zugeordneten Ressourcen 11 eintritt. Er behält die Zuordnung der der jeweiligen Applikation 3 zugeordneten Ressourcen 11 zur jeweiligen Applikation 3 bei, bis die jeweilige Freigabebedingung erfüllt ist. Bei Eintreten der jeweiligen Freigabebedingung gibt er die der jeweiligen Applikation 3 zugeordneten Ressourcen 11 automatisch an die Cloud 10 zurück.

Die vorliegende Erfindung weist viele Vorteile auf. Insbesondere kann auf automatische Weise sekundenweise und sogar millisekundenweise eine jeweils optimale Anforderung von Ressourcen 11 der Cloud 10 durch den Verbundrechner 5 erfolgen. Es werden also dynamisch just in time die jeweils erforderlichen Ressourcen 11 der Cloud 10 (nicht mehr und auch nicht weniger) angefordert und den Applikationen 3 zugeordnet. Dadurch kann insbesondere das Potenzial der Cloud 10, nahezu unbegrenzt Rechenleistung zur Verfügung stellen zu können, effizient genutzt werden. Weiterhin können sowohl Kosten bezüglich der Reservierung von Ressourcen 11 der Cloud 10 minimiert werden als auch die Arbeitszeiten der - in der Regel hochqualifizierten - Benutzer 2 optimal ausgenutzt werden.

Im Rahmen der vorliegenden Erfindung wurden im wesentlichen die Problematik der jederzeit angemessenen Anforderung von Rechenleistung behandelt. Der zugehörige Datenverkehr stellt sich in der Regel als unproblematisch dar. Insbesondere ist es möglich, innerhalb der Cloud 10 permanent einen Speicherbereich hinreichender Größe vorzuhalten. In diesem Speicherbereich können, soweit erforderlich, Nutzdaten 4 und andere Daten hinterlegt sein. In diesem Speicherbereich können auch Daten hinterlegt werden, welche applikationsübergreifend genutzt werden oder innerhalb der jeweiligen Applikation 3 prozessabschnittübergreifend genutzt werden. Falls die Cloud 10 in hinreichender Nähe zum Rechnerverbund angeordnet ist (beispielsweise bei einem Krankenhaus auf dem Gelände des Krankenhauses), stellt weiterhin eine hinreichend leistungsstarke Datenverbindung zwischen dem Rechnerverbund und der Cloud 10 in der Regel kein Problem dar.

Durch die erfindungsgemäße Vorgehensweise ist es (im Falle der einfachsten Ausgestaltung, vergleiche FIG 3) möglich, der jeweiligen Applikation 3 Ressourcen 11 im optimalen Ausmaß zuzuordnen. Dennoch erfolgt keine Beeinflussung anderer Applikationen 3. Weiterhin ist es möglich, die Ressourcen 11 jederzeit dynamisch anzupassen. Störungen zwischen verschiedenen Applikationen 3 sind ausgeschlossen, weil die Zuordnung der Ressourcen 11 für die verschiedenen Applikationen 3 unabhängig voneinander erfolgt. Im Gegensatz zum Stand der Technik müssen sich also weder die Applikationen 3, die auf verschiedenen Arbeitsplätzen 1 ablaufen, noch die Applikationen 3, die auf einem bestimmten Arbeitsplatz 1 ablaufen, bestimmte, vordefinierte Ressourcen 11 teilen. Vielmehr wird jeder einzelnen Applikation 3 individuell und unabhängig von anderen Applikationen 3 ihr eigener Bedarf an Ressourcen 11 zugeordnet. Insbesondere bleibt die interaktive Performance, die vom Benutzer 2 wahrgenommen wird, unabhängig von anderen Applikationen 3 und anderen Arbeitsplätzen 1.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für einen Rechner (5) eines Rechnerverbundes, wobei der Rechnerverbund eine Anzahl von Arbeitsplätzen (1) aufweist, über die ein jeweiliger Benutzer (2) unter Bearbeitung von jeweiligen Nutzdaten (4) mindestens eine jeweilige Applikation (3) ausführt, wobei der Rechner (5) ein Ressourcenverwaltungsprogramm (6) ausführt, wobei der Rechner (5) aufgrund der Ausführung des Ressourcenverwaltungsprogramms (6)
- zumindest beim Starten der jeweiligen Applikation (3) automatisch anhand von für die jeweilige Applikation (3) vordefinierten Applikationsdaten (14) für die jeweilige Applikation (3) einen Ressourcenbedarf (R) ermittelt,
- bei einem Ressourcen (11) einer Cloud (10) verwaltenden Cloudrechner (12) automatisch gemäß dem ermittelten Ressourcenbedarf (R) Ressourcen (11) anfordert,
- vom Cloudrechner (12) aufgrund der Anforderung (A) automatisch eine Zuteilung (Z) von Ressourcen (11) entgegennimmt, wobei die Zuteilung (Z) die Zugriffsdaten enthält, die erforderlich sind, um auf die zugeteilten Ressourcen (11) zugreifen zu können,
- die aufgrund der Anforderung (A) für die jeweilige Applikation (3) zugeteilten Ressourcen (11) automatisch der jeweiligen Applikation (3) zuordnet,
- ab dem Zuordnen der Ressourcen (11) zur jeweiligen Applikation (3) automatisch überwacht, ob eine von der jeweiligen Applikation (3), aber nicht von anderen Applikationen (3) abhängige jeweilige Freigabebedingung für die der jeweiligen Applikation (3) zugeordneten Ressourcen (11) eintritt,
- die Zuordnung der der jeweiligen Applikation (3) zugeordneten Ressourcen (11) zur jeweiligen Applikation (3) beibehält, bis die jeweilige Freigabebedingung erfüllt ist, und
- bei Eintreten der jeweiligen Freigabebedingung die der jeweiligen Applikation (3) zugeordneten Ressourcen (11) automatisch an die Cloud (10) zurückgibt.

2. Betriebsverfahren nach Anspruch 1,
**dadurch gekennzeichnet,**
**dass** die Freigabebedingung der jeweiligen Applikation (3) das Beenden der jeweiligen Applikation (3) ist und dass der Rechner (5) aufgrund der Ausführung des Ressourcenverwaltungsprogramms (6) im Falle des Beendens der jeweiligen Applikation (3) zwar die Ressourcen (11) an die Cloud (10) zurückgibt, andere Applikationen (3) und deren Ressourcen (11) jedoch nicht beeinflusst.

3. Betriebsverfahren nach Anspruch 1,
**dadurch gekennzeichnet,**
- **dass** die jeweilige Applikation (3) eine Mehrzahl von Prozessabschnitten (3a bis 3c) aufweist,
- **dass** die für die jeweilige Applikation (3) vordefinierten Applikationsdaten (14) für jeden der Prozessabschnitte (3a bis 3c) jeweilige Prozessdaten (16) umfassen,
- **dass** die Freigabebedingung das Beenden des Ausführens des jeweils ausgeführten Prozessabschnitts (3a bis 3c) ist,
- **dass** der Rechner (5) aufgrund der Ausführung des Ressourcenverwaltungsprogramms (6) zu einem spätestens beim Eintreten der jeweiligen Freigabebedingung liegenden Zeitpunkt prüft, ob die jeweilige Applikation (3) bei Beenden des momentan ausgeführten Prozessabschnitts (3a bis 3c) fortgesetzt oder beendet wird, im Falle des Beendens der jeweiligen Applikation (3) zwar die Ressourcen (11) an die Cloud (10) zurückgibt, andere Applikationen (3) und deren Ressourcen (11) jedoch nicht beeinflusst und im Falle des Startens oder der Fortsetzung der jeweiligen Applikation (3)
-- anhand der Prozessdaten (16) des jeweils auszuführenden Prozessabschnitts (3a bis 3c) für den jeweils auszuführenden Prozessabschnitt (3a bis 3c) automatisch den Ressourcenbedarf (R) ermittelt,
-- bei dem Cloudrechner (12) automatisch den ermittelten Ressourcenbedarf (R) anfordert,
-- vom Cloudrechner (12) aufgrund der Anforderung (A) automatisch eine Zuteilung (Z) von Ressourcen (11) entgegennimmt und
-- die aufgrund der jeweiligen Anforderung (A) für die jeweilige Applikation (3) zugeteilten Ressourcen (11) automatisch dem jeweils auszuführenden Prozessabschnitt (3a bis 3c) zuordnet.

4. Betriebsverfahren nach Anspruch 3,
**dadurch gekennzeichnet,**
**dass** der Rechner (5) derart ausgebildet ist, dass er aufgrund der Ausführung des Ressourcenverwaltungsprogramms (6) für die jeweilige Applikation (3) unabhängig voneinander die Ressourcen (11) für mehrere Prozessabschnitte (3a bis 3c) verwaltet.

5. Betriebsverfahren nach Anspruch 4,
**dadurch gekennzeichnet,**
**dass** der Zeitpunkt für mindestens einen Prozessabschnitt (3a bis 3c) bereits vor dem Eintreten der jeweiligen Freigabebedingung liegt.

6. Betriebsverfahren nach Anspruch 5,
**dadurch gekennzeichnet,**
**dass** der Zeitpunkt durch einen Zeitablauf, gerechnet ab dem Beginn des Ausführens des unmittelbar vor dem Prozessabschnitt (3a bis 3c), für den der Ressourcenbedarf (R) ermittelt wird, ausgeführten Prozessabschnitts (3a bis 3c) bestimmt ist.

7. Betriebsverfahren nach Anspruch 5 oder 6,
**dadurch gekennzeichnet,**
- **dass** die Prozessabschnitte (3a bis 3c) von der jeweiligen Applikation (3) in einer vorbestimmten Reihenfolge ausgeführt werden,
- **dass** innerhalb der Reihenfolge der Prozessabschnitte (3a bis 3c) auf mindestens einen ersten, automatisiert ausgeführten Prozessabschnitt (3a) ein zweiter Prozessabschnitt (3b) folgt, in dem die jeweilige Applikation (3) mit dem Benutzer (2) interagiert, und
- **dass** der Rechner (5) aufgrund der Ausführung des Ressourcenverwaltungsprogramms (6) zumindest die Ressourcen (11) für den zweiten Prozessabschnitt (3b) vor dem Beenden der Ausführung des ersten Prozessabschnitts (3a) anfordert.

8. Betriebsverfahren nach Anspruch 5, 6 oder 7,
**dadurch gekennzeichnet,**
- **dass** die Prozessabschnitte (3a bis 3b) von der jeweiligen Applikation (3) in einer vorbestimmten Reihenfolge ausgeführt werden,
- **dass** die Reihenfolge der Prozessabschnitte (3a bis 3b) iterativ abgearbeitet wird,
- **dass** innerhalb der Reihenfolge der Prozessabschnitte (3a bis 3b) der jeweiligen Applikation (3) auf mindestens einen ersten, automatisiert ausgeführten Prozessabschnitt (3a) ein zweiter Prozessabschnitt (3b) folgt, in dem die jeweilige Applikation (3) mit dem Benutzer (2) interagiert, und
- **dass** der Rechner (5) aufgrund der Ausführung des Ressourcenverwaltungsprogramms (6) bereits während des Ausführens des zweiten Prozessabschnitts (3b) einer bestimmten Iteration den Ressourcenbedarf (R) für den ersten Prozessabschnitt (3a) der nächsten Iteration ermittelt, bei der Cloud (10) die entsprechenden Ressourcen (11) anfordert und die von der Cloud (10) zugeteilten Ressourcen (11) dem ersten Prozessabschnitt (3a) der nächsten Iteration zuordnet.

9. Betriebsverfahren nach einem der obigen Ansprüche,
**dadurch gekennzeichnet,**
**dass** der Rechner (5) aufgrund der Ausführung des Ressourcenverwaltungsprogramms (6) die Ausnutzung der der jeweiligen Applikation (3) zugeteilten Ressourcen (11) erfasst und die Applikationsdaten (14) anhand der Ausnutzung der der jeweiligen Applikation (3) zugeteilten Ressourcen (11) nachführt.

10. Betriebsverfahren nach einem der obigen Ansprüche,
**dadurch gekennzeichnet,**
**dass** die Applikationsdaten (14) einzelnen Instanzen der jeweiligen Applikation (3) individuell zugeordnet sind.

11. Betriebsverfahren nach Anspruch 10,
**dadurch gekennzeichnet,**
**dass** der Rechner (5) aufgrund der Ausführung des Ressourcenverwaltungsprogramms (6) von der jeweiligen Applikation (3) eine jeweilige Benutzeridentifikation (BI) und/oder eine jeweilige Nutzdatenidentifikation (4I) entgegennimmt und dass der Rechner (5) bei der Ermittlung des jeweiligen Ressourcenbedarfs (R) die jeweilige Benutzeridentifikation (BI) und/oder die jeweilige Nutzdatenidentifikation (4I) berücksichtigt.

12. Betriebsverfahren nach Anspruch 10 oder 11,
**dadurch gekennzeichnet,**
**dass** der Rechner (5) aufgrund der Ausführung des Ressourcenverwaltungsprogramms (6) von der jeweiligen Applikation (3) einen jeweiligen Sonderbefehl (C) entgegennimmt und dass der Rechner (5) bei der Ermittlung des jeweiligen Ressourcenbedarfs (R) den jeweiligen Sonderbefehl (C) berücksichtigt.

13. Ressourcenverwaltungsprogramm, das Maschinencode (7) umfasst, der von einem Rechner (5) eines Rechnerverbunds unmittelbar ausführbar ist, wobei die Abarbeitung des Maschinencodes (7) durch den Rechner (5) des Rechnerverbunds bewirkt, dass der Rechner (5) den Rechnerverbund gemäß einem Betriebsverfahren nach einem der obigen Ansprüche verwaltet.

14. Rechnerverbund,
- wobei der Rechnerverbund eine Anzahl von Arbeitsplätzen (1) aufweist, über die von einem jeweiligen Benutzer (2) unter Bearbeitung von jeweiligen Nutzdaten (4) mindestens eine jeweilige Applikation (3) ausführbar ist,
- wobei der Rechnerverbund weiterhin einen Rechner (5) aufweist, der ein Ressourcenverwaltungsprogramm (6) nach Anspruch 13 ausführt.

## Claims

1. Operating method for a computer (5) of a computer network, wherein the computer network has a number of workstations (1), via which a respective user (2) executes at least one respective application (3) while processing respective useful data (4), wherein the computer (5) executes a resource management program (6), wherein the computer (5), on the basis of the execution of the resource management program (6),
- at least when starting the respective application (3), automatically determines a resource requirement (R) for the respective application (3) on the basis of application data (14) predefined for the respective application (3),
- automatically requests resources (11) at a cloud computer (12), which manages resources (11) of a cloud (10), according to the determined resource requirement (R),
- automatically receives an allocation (Z) of resources (11) from the cloud computer (12) on the basis of the request (A), wherein the allocation (Z) contains the access data which is required in order to be able to access the allocated resources (11),
- automatically allocates the resources (11), which were allocated on the basis of the request (A) for the respective application (3), to the respective application (3),
- starting from the allocation of the resources (11) to the respective application (3), automatically monitors whether a respective release condition, which is dependent upon the respective application (3), but not other applications (3), occurs for the resources (11) allocated to the respective application (3),
- maintains the allocation of the resources (11), which were allocated to the respective application (3), to the respective application (3) until the respective release condition is met, and
- when the respective release condition occurs, automatically returns the resources (11) allocated to the respective application (3) to the cloud (10).

2. Operating method according to claim 1,
**characterised in that**
the release condition of the respective application (3) is the termination of the respective application (3) and that, on the basis of the execution of the resource management program (6), although the computer (5) returns the resources (11) to the cloud (10) in the event of the termination of the respective application (3), other applications (3) and the resources (11) thereof, however, are not influenced.

3. Operating method according to claim 1,
**characterised in that**
- the respective application (3) has a plurality of process sections (3a to 3c),
- the application data (14) predefined for the respective application (3) comprises respective process data (16) for each of the process sections (3a to 3c),
- the release condition is the termination of the execution of the respectively executed process section (3a to 3c),
- the computer (5), on the basis of the execution of the resource management program (6), at a point in time lying at the latest at the occurrence of the respective release condition, checks whether the respective application (3) is continued or terminated when the process section (3a to 3c) currently being executed is terminated; although in the event of the termination of the respective application (3) it returns the resources (11) to the cloud (10) (3), it does not, however, influence other applications (3) and the resources (11) thereof and, in the event of the starting or the continuation of the respective application (3),
-- on the basis of the process data (16) of the process section (3a to 3c) to be executed in each case, automatically determines the resource requirement (R) for the process section (3a to 3c) to be executed in each case,
-- automatically requests the determined resource requirement (R) at the cloud computer (12),
-- automatically receives an allocation (Z) of resources (11) from the cloud computer (12) on the basis of the request (A) and
- automatically allocates the resources (11), which were allocated on the basis of the respective request (A) for the respective application (3), to the process section (3a to 3c) to be executed in each case.

4. Operating method according to claim 3,
**characterised in that**
the computer (5) is embodied such that it manages the resources (11) for a plurality of process sections (3a to 3c) independently of one another, on the basis of the execution of the resource management program (6), for the respective application (3).

5. Operating method according to claim 4,
**characterised in that**
the point in time for at least one process section (3a to 3c) already lies before the occurrence of the respective release condition.

6. Operating method according to claim 5,
**characterised in that**
the point in time is determined by a time sequence, calculated starting from the beginning of the execution of the process section (3a to 3c), which is executed immediately before the process section (3a to 3c) for which the resource requirement (R) is determined.

7. Operating method according to claim 5 or 6,
**characterised in that**
- the process sections (3a to 3c) are executed by the respective application (3) in a predetermined order,
- within the order of the process sections (3a to 3c), at least one first, automatically executed process section (3a) is followed by a second process section (3b), in which the respective application (3) interacts with the user (2), and
- the computer (5), on the basis of the execution of the resource management program (6), at least requests the resources (11) for the second process section (3b) before the termination of the execution of the first process section (3a).

8. Operating method according to claim 5, 6 or 7,
**characterised in that**
- the process sections (3a to 3b) are executed by the respective application (3) in a predetermined order,
- the order of the process sections (3a to 3b) is worked through iteratively,
- within the order of the process sections (3a to 3b) of the respective application (3), at least one first, automatically executed process section (3a) is followed by a second process section (3b), in which the respective application (3) interacts with the user (2), and
- the computer (5), on the basis of the execution of the resource management program (6), during the execution of the second process section (3b) of one particular iteration, already determines the resource requirement (R) for the first process section (3a) of the next iteration, requests the corresponding resources (11) at the cloud (10) and allocates the resources (11), which were allocated by the cloud (10), to the first process section (3a) of the next iteration.

9. Operating method according to one of the preceding claims,
**characterised in that**
the computer (5), on the basis of the execution of the resource management program (6), captures the utilisation of the resources (11) allocated to the respective application (3) and tracks the application data (14) on the basis of the utilisation of the resources (11) allocated to the respective application (3).

10. Operating method according to one of the preceding claims,
**characterised in that**
the application data (14) is allocated individual instances of the respective application (3) individually.

11. Operating method according to claim 10,
**characterised in that**
the computer (5), on the basis of the execution of the resource management program (6), receives a respective user identification (BI) and/or a respective useful data identification (41) from the respective application (3), and that the computer (5), when determining the respective resource requirement (R), takes into consideration the respective user identification (BI) and/or the respective useful data identification (41).

12. Operating method according to claim 10 or 11,
**characterised in that**
the computer (5), on the basis of the execution of the resource management program (6), receives a respective special command (C) from the respective application (3), and that the computer (5), when determining the respective resource requirement (R), takes into consideration the respective special command (C).

13. Resource management program, which comprises machine code (7), which is able to be directly executed by a computer (5) of a computer network, wherein the machine code (7) being worked through by the computer (5) of the computer network causes the computer (5) to manage the computer network according to an operational method according to one of the above claims.

14. Computer network,
- wherein the computer network has a number of workstations (1), via which at least one respective application (3) is able to be executed by a respective user (2) while processing respective useful data (4),
- wherein the computer network furthermore has a computer (5), which executes a resource management program (6) according to claim 13.

## Revendications

1. Procédé pour faire fonctionner un ordinateur (5) d'un réseau d'ordinateur, le réseau d'ordinateur ayant un certain nombre d'emplacements (1) de travail, par lesquels un utilisateur (2) exécute, en traitant des données (4) utiles, au moins une application (3), l'ordinateur (5) exécutant un programme (6) de gestion de ressources, l'ordinateur (5), sur la base de l'exécution du programme (6) de gestion de ressource,
- déterminant, au moins au début de l'application (3), automatiquement, à l'aide de données (14) d'application définies à l'avance pour l'application (3), un besoin (R) de ressources pour l'application (3),
- pour un ordinateur (12) de nuage gérant des ressources d'un nuage (10), demandant automatiquement des ressources (11), conformément au besoin (R) de ressources, qui a été déterminé,
- recevant de l'ordinateur (12) de nuage, sur la base de la demande (A), automatiquement une attribution (Z) de ressources (11), l'attribution (Z) contenant les données d'accès nécessaires pour pouvoir accéder aux ressources (11) attribuées,
- affectant, automatiquement à l'application (3), les ressources (11) attribuées sur la base de la demande (A) pour l'application (3),
- contrôlant, automatiquement à partir de l'affectation de ressources (11) à l'application (3), si une condition de validation, dépendante de l'application (3) mais ne dépendant pas d'autres applications (3), s'est produite pour les ressources (11) affectées à l'application (3),
- l'affectation des ressources (11) affectées à l'application (3) étant maintenue pour l'application (3), étant maintenue jusqu'à ce que la condition de validation soit satisfaite, et
- à l'apparition de la condition de validation, retournant automatiquement au nuage (10) les ressources (11) affectées à l'application (3).

2. Procédé suivant la revendication 1,
**caractérisé**
**en ce que** la condition de validation de l'application (3) est l'achèvement de l'application (3) et en ce que l'ordinateur (5), en raison de l'exécution du programme (6) de gestion des ressources, retourne, dans le cas de l'achèvement de l'application (3), certes les ressources (11) au nuage (10), mais n'influence pas d'autres applications et leurs ressources (11).

3. Procédé suivant la revendication 1,
**caractérisé**
- **en ce que** l'application (3) a une pluralité de parties (3a à 3c) de processus,
- **en ce que** les données (14) d'application définies à l'avance pour l'application (3) comprennent, pour chacune des parties (3a à 3c) de processus, des données (16) respectives de processus,
- **en ce que** la condition de validation est l'achèvement de l'exécution de la partie (3a à 3c) de processus exécutée respectivement,
- **en ce que** l'ordinateur (5) contrôle, sur la base de l'exécution du programme (6) de gestion des ressources, à un instant au plus tard à l'apparition de la condition de validation, si l'application (3) se poursuit ou est achevée à l'achèvement de la partie (3a à 3c) de processus exécutée momentanément, dans le cas de l'achèvement de l'application (3), retourne certes les ressources (11) au nuage (10), mais n'influence pas d'autres applications (3) et leurs ressources (11) et, dans le cas du début ou de la continuation de l'application (3),
-- détermine, à l'aide des données (16) de processus de la partie (3a à 3c) de processus en exécution, pour la partie (3a à 3c) de procession en exécution, automatiquement le besoin (R) de ressources,
-- demande à l'ordinateur (12) de nuage automatiquement le besoin de ressource déterminé,
-- reçoit de l'ordinateur (12) de nuage, sur la base de la demande (A), automatiquement une attribution (Z) de ressources (11) et
-- affecte automatiquement à la partie (3a à 3c) de processus en exécution les ressources (11) attribuées à l'application (3) sur la base de la demande (A).

4. Procédé suivant la revendication 3,
**caractérisé**
**en ce que** l'ordinateur (5) est constitué de manière à gérer, en raison de l'exécution du programme (6) de gestion de ressources pour l'application (3), indépendamment les unes des autres, les ressources (11) pour plusieurs parties (3a à 3c) de processus.

5. Procédé suivant la revendication 4,
**caractérisé**
**en ce que** l'instant pour au moins une partie (3a à 3c) du processus se trouve déjà avant l'apparition de la condition de validation.

6. Procédé suivant la revendication 5,
**caractérisé**
**en ce que** l'instant est déterminé par un temps écoulé, calculé à partir du début de l'exécution de la partie (3a à 3c) de processus exécutée immédiatement avant la partie (3a à 3c) du processus, pour laquelle le besoin (R) de ressources est déterminé.

7. Procédé suivant la revendication 5 ou 6,
**caractérisé**
- **en ce que** l'on exécute les parties (3a à 3c) de processus pour l'application (3) dans un ordre déterminé à l'avance,
- **en ce que**, dans l'ordre des parties (3a à 3c) de processus, fait suite à au moins une première partie (3a) de processus exécutée de manière automatisée, une deuxième partie (3b) de processus, dans laquelle l'application (3) interagit avec l'utilisateur (2), et
- **en ce que** l'ordinateur (5) demande, sur la base de l'exécution du programme (6) de gestion de ressources, au moins les ressources (11) pour la deuxième partie (3b) de processus, avant l'achèvement de l'exécution de la première partie (3a) de processus.

8. Procédé suivant la revendication 5, 6 ou 7,
**caractérisé**
- **en ce que** l'on exécute les parties (3a à 3b) de processus par l'application (3) dans un ordre déterminé à l'avance,
- **en ce que** l'on établit itérativement l'ordre des parties (3a à 3b) de processus,
- **en ce que**, dans l'ordre des parties (3a à 3b) de processus de l'application (3), à au moins une première partie (3a) de processus exécutée de manière automatisée, fait suite une deuxième partie (3b) de processus, dans laquelle l'application (3) interagit avec l'utilisateur (2), et
- **en ce que** l'ordinateur (5) détermine, sur la base de l'exécution du programme (6) de gestion de ressources, déjà pendant l'exécution de la deuxième partie (3b) du processus d'une itération déterminée, le besoin (R) de ressources pour la première partie (3a) de processus de l'itération suivante, demande au nuage (10) des ressources (11) correspondantes et affecte les ressources (11) attribuées par le nuage (10) à la première partie (3a) de processus de l'itération suivante.

9. Procédé suivant l'une des revendications précédentes,
**caractérisé**
**en ce que** l'ordinateur (5) détecte, sur la base de l'exécution du programme (6) de gestion des ressources, l'épuisement des ressources (11) attribuées à l'application (3) et suit les données (14) d'application à l'aide de l'épuisement des ressources (11) attribuées à l'application (3).

10. Procédé suivant l'une des revendications précédentes,
**caractérisé**
**en ce que** les données (14) d'application sont affectées individuellement à diverses instances de l'application (3).

11. Procédé suivant la revendication 10,
**caractérisé**
**en ce que** l'ordinateur (5) reçoit, sur la base de l'exécution du programme (6) de gestion de ressources, de l'application (3), une identification (BI) d'utilisateur et/ou une identification (4I) de données utiles et en ce que l'ordinateur (5) tient compte, lors de la détermination du besoin (R) de ressources, de l'identification (BI) de l'utilisateur et/ou de l'identification (4I) de données utiles.

12. Procédé suivant la revendication 10 ou 11,
**caractérisé**
**en ce que** l'ordinateur (5) reçoit, sur la base de l'exécution du programme (6) de gestion des ressources, de l'application (3), une instruction (C) particulière et en ce que l'ordinateur (5) tient compte, lors de la détermination du besoin (R) de ressources, de l'instruction (C) particulière.

13. Programme des gestion de ressources, qui comprend un code (7) machine pouvant être exécuté directement par un ordinateur (5) d'un réseau d'ordinateur, l'élaboration du code (7) machine, par l'ordinateur (5) du réseau d'ordinateur, faisant que l'ordinateur (5) gère le réseau d'ordinateur suivant un procédé de fonctionnement suivant l'une des revendications précédentes.

14. Réseau d'ordinateur,
- dans lequel le réseau d'ordinateur a un certain nombre d'emplacements (1) de travail, par lesquels peut être réalisé, par un utilisateur (2), en traitant des données (4) utiles, au moins une application (3),
- dans lequel le réseau d'ordinateur a, en outre, un ordinateur (5), qui exécute un programme (6) de gestion des ressources suivant la revendication 13.
